# EUROPÄISCHE PATENTSCHRIFT

(11) **EP 0 740 146 B1**
(45) Veröffentlichungstag und Bekanntmachung des Hinweises auf die Patenterteilung: **06.10.2004**
(21) Anmeldenummer: 96105056.4
(22) Anmeldetag: 29.03.1996
(51) Int. Cl.: G01N 21/27, G01N 21/31, G01N 21/53, G01N 21/61

(54) **Vorrichtung zum Detektieren eines Gases oder Aerosols**
Device for detecting a gas or aerosol
Appareil pour la détection d'un gaz ou aérosol

(30) Priorität: 04.04.1995 DE 19512126
(43) Veröffentlichungstag der Anmeldung: 30.10.1996
(73) Patentinhaber: HEKATRON GmbH, D-79295 Sulzburg (DE)
(72) Erfinder: Sommer, Michael, Dipl.-Ing., 79429 Eschbach (DE); Kuhn-Matysiak, Ulrich, Dipl.-Ing. FH, 79219 Staufen (DE); Moritz, Frank, Dipl.-Ing. FH, 79100 Freiburg (DE)
(74) Vertreter: Patent- und Rechtsanwaltssozietät, Maucher, Börjes & Kollegen

(56) Entgegenhaltungen:
- AT-B- 399 594
- DE-A- 4 135 843
- DE-A- 4 328 671
- GB-A- 2 059 574
- GB-A- 2 114 286
- US-A- 4 271 124
- US-A- 4 657 397
- US-A- 4 700 079
- SOVIET INVENTIONS ILLUSTRATED, El Sektion, Woche 8622, 09. Juli 1986 DERWENT PUBLICATIONS LTD., London; & SU-A-1188 600 (ANALYTICAL EQUPE DE)

## Beschreibung

Die Erfindung bezieht sich auf eine Vorrichtung zum Detektieren eines Gases oder Aerosols mit wenigstens einer optischen Transmissions-Meßstrecke, mit zumindest einer dieser zugeordneten optischen Transmissions-Referenzstrecke sowie mit einer Meßund Auswerteeinheit zum Vergleichen eines aus der Transmissions-Meßstrecke ermittelten Meßsignales mit einem aus der Transmissions-Referenzstrecke ermittelten Referenzsignal, wobei für die Transmissions-Meß- und die Transmissions-Referenzstrecke mindestens eine gemeinsame optische Strahlungsquelle sowie zumindest eine Spiegeleinheit zum Einkoppeln deren Strahlung in die Transmissions-Meß- und Transmissions-Referenzstrecke vorgesehen sind, wobei der Transmissions-Meßstrecke wenigstens ein optischer Meß-Empfänger und der Transmissions-Referenzstrecke zumindest ein optischer Referenz-Empfänger zugeordnet sind, wobei die Transmissions-Meßstrecke in einer für das zu detektierende Gas oder Aerosol zugänglichen, in einem Kammergehäuse vorgesehenen Meßkammer und die Transmissions-Referenzstrecke in einer im Kammergehäuse vorgesehenen Referenzkammer angeordnet sind.

Aus GB-2 059 574 A kennt man bereits eine Vorrichtung der eingangs genannten Art, die für die Meß- und die Referenzkammer jeweils separate Kammergehäuse aufweist. Bei dieser Vorrichtung sind Meß- und Referenzstrecke parallel zueinander angeordnet und die Strahlungsquelle ist in Axialrichtung seitlich neben den beiden Kammergehäusen vorgesehen. Benachbart zu der Strahlungsquelle ist eine Spiegeleinheit angeordnet, die zwei Planspiegel aufweist, welche die von der Strahlungsquelle ausgehende optische Strahlung jeweils um 90° umleiten und in die Meß- bzw. Referenzkammer einkoppeln. An den der Spiegeleinheit abgewandten Axialenden der beiden Kammergehäuse weist die Vorrichtung jeweils einen außerhalb der Kammergehäuse angeordneten optischen Empfänger zur Detektion des Meß- bzw. Referenzsignals auf. Bei der vorbekannten Vorrichtung ist die für die Meßstrecke vorgesehene Wellenlänge auf eine Absorptionswellenlänge des zu detektierenden Gases abgestimmt, so daß die die Meßkammer durchleuchtende Strahlung und auch das Meßsignal des diese Strahlung detektierenden Meß-Empfängers geschwächt werden, wenn das zu detektierende Gas in die Meßkammer gelangt. An dem Referenz-Empfänger tritt dagegen eine solche Signalschwächung nicht auf, da die Referenzkammer mit einem Referenzgas gefüllt ist, welches das zu detektierende Gas nicht enthält. Bei der vorbekannten Vorrichtung sind der Meß- und der Referenz-Empfänger zum Vergleichen von Meß- und Referenzsignal mit einem Mikrocomputer verbunden.

Wegen der zahlreichen Einzelkomponenten weist die Vorrichtung einen vergleichsweise komplizierten Aufbau auf und ist daher praktisch nur für eine Verwendung in Laboratorien geeignet. Ungünstig ist außerdem die relativ große Baugröße der Vorrichtung, die einen kompakten und kostengünstigen Gas-Sensor nicht ermöglicht. Außerdem wird die von der Strahlungsquelle ausgesendete optische Strahlung nur relativ schlecht in die Meß- bzw. Referenzkammer eingekoppelt, so daß eine entsprechend leistungsfähige Strahlungsquelle erforderlich ist, um an den Empfängern eine ausreichende Signalstärke zu erzielen.

Aus der US-A-4 271 124 ist ein Infrarot-Gasanalysator bekannt, der nach dem Zweistrahl-Wechsellicht-Verfahren arbeitet. Die von einer Infrarot-Strahlungsquelle ausgehende Strahlung wird mit Hilfe eines Reflektors und eines Strahlenteilers in zwei parallele Strahlengänge aufgeteilt, die abwechselnd durch ein rotierendes Blendenrad unterbrochen werden. Während in einem Meßstrahlengang eine das Meßgas enthaltene Meßcuvette liegt, befindet sich in einem Vergleichsstrahlengang eine Vergleichscuvette mit einem nicht absorbierenden Gas, z.B. Stickstoff. In den beiden Strahlengängen sind jeweils zwei selektive Strahlungsempfänger mit ihren Empfängerkammern hintereinander angeordnet. Die Empfängerkammern des einen Empfängers stehen über eine Leitung miteinander in Verbindung, in der ein thermischer Strömungsfühler angebracht ist, welcher die von den absorbtionsbedingten Druckschwankungen in den Empfängerkammern hervorgerufene pulsierende Strömung mit Hilfe einer Messbrückenschaltung in ein elektrisches Signal umsetzt. Die Empfängerkammern des anderen selektiven Empfängers sind mit solchen Gasen gefüllt, die als Störkomponenten im Meßgas unberücksichtigt bleiben sollen. Der elektrische Abgriff der Druckschwankungen erfolgt hier ebenfalls über einen, in einem Verbindungsrohr zwischen den Empfängerkammern angeordneten Strömungsfühler, der Teil einer zweiten Meßbrückenschaltung ist.

Aus der SU-A-1 188 600 ist bereits ein Gasanalysator bekannt, der in einer Cuvette eine Strahlungsdiode sowie einen Strahlungsempfänger hat. Die Cuvette des vorbekannten Gasanalysators ist durch eine strahlungsdurchlässige Trennwand in zwei Sektionen geteilt, von denen eine erste Sektion für das zu untersuchende Gasgemisch vorgesehen ist, während in einer zweiten Sektion der optische Empfänger sowie die in entgegengesetzte Richtungen Strahlung abgebende Strahlungsdiode angeordnet sind. Die Stirnseiten der Cuvette sind als sphärische Reflektoren ausgebildet, so daß die von der Strahlungsdiode in der einen Richtung abgestrahlte Strahlung durch die erste Sektion sowie die Trennwand hindurch gesendet wird, um anschließend von den Reflektoren der Cuvette zu dem in der zweiten Sektion befindlichen Empfänger weitergeleitet zu werden. Der vorbekannte Gasanalysator weist keine räumlich getrennten Meß- und Referenzstrecken auf. Da der vorbekannte Gasanalysator nur einen Empfänger hat, sind für die Meß- und Referenzwertermittlung zeitlich getrennte Lichtimpulse erforderlich.

Es besteht die Aufgabe eine Vorrichtung der eingangs genannten Art zu schaffen, die kompakt aufgebaut ist, die kostengünstig herstellbar ist und bei der die von der Strahlungsquelle ausgesendete elektromagnetische Strahlung besser genutzt ist.

Die Lösung dieser Aufgabe besteht bei einer Vorrichtung der eingangs genannten Art darin, daß die Spiegeleinheit eine Parabolspiegeleinheit ist, daß der Parabolspiegeleinheit jeweils wenigstens ein Meß-Parabolspiegel für den Meß-Empfänger und wenigstens eine Referenz-Parabolspiegel für den Referenz-Empfänger zugeordnet ist, und daß Referenz-Parabolspiegeleinheit, Meß-Parabolspiegel und Referenz-Parabolspiegel jeweils durch Innenflächen des Kammergehäuses gebildet sind.

Die Parabolspiegeleinheit ermöglicht dabei eine nahezu parallele Bündelung der von der Strahlungsquelle ausgesendeten optischen Strahlung, so daß praktisch die gesamte von der Strahlungsquelle aufgebrachte Strahlungsenergie in die Meß- und die Referenzkammer eingekoppelt wird. Da auch die Empfänger über entsprechende Parabolspiegel verfügen, welche die die Meß- bzw. Referenzkammer durchleuchtende Strahlung auf die in ihrem Brennpunkt angeordneten Empfänger fokussieren, wird für den Betrieb der Vorrichtung nur eine Strahlungsquelle mit geringer Abstrahlleistung benötigt. Die Strahlungsquelle kann deshalb beispielsweise als Sendediode entsprechend kompakt aufgebaut sein und weist außerdem nur einen geringen Energieverbrauch auf, was besonders bei batteriebetriebenen Vorrichtungen vorteilhaft ist.

Da sowohl die Parabolspiegeleinheit als auch die beiden Empfänger-Parabolspiegel durch Innenflächen des Kammergehäuses gebildet sind, ergibt sich eine besonders einfach aufgebaute Vorrichtung, bei der separate Spiegelelemente nicht erforderlich sind. Außerdem sind die in das Kammergehäuse integrierten Parabolspiegel bereits bei der Fertigung des Kammergehäuses optimal aufeinander ausgerichtet, so daß ein nachträgliches Justieren von Spiegelelementen entfällt. Vorteilhaft ist auch, daß das Kammergehäuse und sämtliche Parabolspiegel praktisch in einem Arbeitsgang beispielsweise als Spritzgußteil hergestellt werden können. Die Vorrichtung eignet sich deshalb besonders gut für eine Serienproduktion und ist daher entsprechend kostengünstig herstellbar. Durch die in das Kammergehäuse integrierten Parabolspiegel ergibt sich außerdem ein besonders kompakter Aufbau.

Eine Weiterbildung der Erfindung sieht vor, daß Strahlungsquelle, Meß- Empfänger und Referenz-Empfänger sowie gegebenenfalls die Meß- und Auswerteeinheit auf einer gemeinsamen Platine angeordnet sind und daß das Kammergehäuse auf diese Platine aufgesetzt ist. Die Vorrichtung ist dadurch noch leichter herstellbar, da außer der Elektronik-Platine praktisch nur ein einziges zusätzliches Teil, nämlich das Kammergehäuse, erforderlich ist.

Vorteilhaft ist, wenn das Kammergehäuse im wesentlichen halbschalenförmig ausgebildet ist und einen vorzugsweise ebenen Verbindungsflansch zum Aufsetzen auf die Platine aufweist. Das Kammergehäuse ist dann besonders einfach auf der Platine montierbar, wobei die Platine in Gebrauchsstellung eine Wandung der Meß- und/oder der Referenzkammer bildet. Vorteilhaft ist dabei vor allem, daß das halbschalenförmig geformte Kammergehäuse als Spritzgußteil mit nur zwei Spritzguß-Formteilen herstellbar ist.

Eine besonders vorteilhafte Ausbildungsform sieht vor, daß wenigstens eine die Meßkammer begrenzende Wandung des Kammergehäuses Durchtrittskanäle mit einem labyrinthartigen Durchtrittsverlauf für das zu detektierende Medium aufweist. Das zu detektierende Gas oder Aerosol kann dann auf einfache Weise von außen in die Meßkammer gelangen und dennoch sind die Meßkammer und die in dem Kammergehäuse befindlichen Empfänger praktisch vollständig gegen von außen einfallende Streustrahlung abgeschirmt. Dabei besteht das Kammergehäuse vorzugsweise aus einem lichtundurchlässigen oder lichtundurchlässig beschichteten transparenten Material.

Damit das Kammergehäuse noch leichter herstellbar ist, ist vorgesehen, daß die Durchtrittskanäle zwischen Gehäuserippen angeordnet sind und vorzugsweise einen rechteckigen Querschnitt aufweisen. Dabei ist die in Durchtrittsrichtung orientierte Abmessung der Durchtrittskanäle größer gewählt als der Abstand zwischen den Gehäuserippen, damit möglichst kein Fremdlicht in die Meßkammer eintreten kann.

Zweckmäßigerweise ist vorgesehen, daß die Gehäuserippen einen in Durchtrittsrichtung der Durchtrittskanäle etwa L-förmig oder halbmondförmig ausgebildeten Querschnitt aufweisen. Die Meßkammer ist dann besonders gut gegen Fremdlicht abgeschirmt.

Damit das zu detektierende Medium bei einem auf die Flachseite einer Platine aufgesetzten Kammergehäuse möglichst aus allen Richtungen gleich gut in die Meßkammer einströmen kann, ist es vorteilhaft, wenn die Gehäuserippen an einer dem Verbindungsflansch abgewandten Wandung des Kammergehäuses vorgesehen sind.

Eine andere Ausführungsform sieht vor, daß die Gehäuserippen an wenigstens einer quer zur Montageebene des Verbindungsflansches angeordneten Seitenwandung des Kammergehäuses angeordnet sind. Das Kammergehäuse ist dann beispielsweise als Spritzgußteil besonders einfach herstellbar. Zweckmäßigerweise sind dabei die Gehäuserippen mit ihrer Längserstreckungsrichtung etwa senkrecht zur Montageebene des Verbindungsflansches ausgerichtet und reichen mit einem stirnseitigen Ende zumindest bereichsweise bis zur Montageebene, wobei die zwischen den Gehäuserippen vorgesehenen Durchtrittskanäle für das zu detektierende Medium jeweils an ihren der Montageebene zugewandten Endbereichen randoffen sind. Das für die Herstellung des Kammergehäuses vorgesehene Spritzgußwerkzeug kann dann besonders einfach aufgebaut sein und braucht nur zwei Werkzeugteile aufzuweisen.

Damit das zu detektierende Medium noch besser in die Meßkammer einströmen kann, ist vorgesehen, daß mehrere Gehäuserippen vorzugsweise parallel versetzt zueinander angeordnet sind und daß die äußeren, der Meßkammer abgewandten Durchtrittsöffnungen der zwischen den Gehäuserippen angeordneten Durchtrittskanäle auf einer Hüllfläche liegen, die zumindest abschnittsweise gegenüber der Meßstrecke geneigt ist. Dabei ist es besonders vorteilhaft, wenn die äußeren Durchtrittsöffnungen der zwischen den Gehäuserippen vorgesehenen Durchtrittskanäle auf einer Hüllfläche liegen, die ausgehend von einem erhöhten Mittelbereich zu den Axialenden des Kammergehäuses hin beidseitig in Richtung der Meßkammer abfällt. Die äußeren Durchtrittsöffnungen sind also auf einer dreidimensionalen Hüllfläche, beispielsweise an der Oberfläche eines prismatisch geformten Teilbereichs des Kammergehäuses angeordnet, so daß das zu detektierende Gas, auch wenn es aus unterschiedlichen Richtungen auf das Kammergehäuse zuströmt, jeweils einen genügend großen Durchtrittsquerschnitt zum Einströmen in die Meßkammer vorfindet.

Vorteilhaft ist, wenn die in die Meßkammer mündenden inneren Durchtrittsöffnungen der Durchtrittskanäle in einer Ebene liegen und wenn die Gehäuserippen in dem erhöhten Mittelbereich eine größere Höhe aufweisen als in den beidseitig axial dazu angeordneten abgesenkten Rippenbereichen. In der Meßkammer ergibt sich dadurch im Bereich der Gehäuserippen eine - abgesehen von den Durchtrittsöffnungen - praktisch ebene und gerade Kammerwandung, die weitgehend verhindert, daß eventuell durch das Labyrinth eindringendes Streulicht zu den Sensoren gelangt.

Besonders günstig ist, wenn an dem Kammergehäuse wenigstens zwei Teilbereiche mit in unterschiedlichen Richtungen geneigten Gehäuserippen vorgesehen sind und wenn diese insbesondere beidseits des erhöhten Mittelbereichs angeordnet sind. Das zu detektierende Gas oder Aerosol kann dann aus unterschiedlichen Richtungen noch besser in die Meßkammer eindringen. Vorzugsweise sind dabei die die Gehäuserippen mit unterschiedlicher Neigung aufweisenden Teilbereiche des Kammergehäuses spiegelsymmetrisch bezüglich einer insbesondere senkrecht zur Meßstrecke angeordneten Symmetrieebene ausgebildet. Die Vorrichtung weist dann bei aus unterschiedlichen Richtungen einströmenden Gasen oder Aerosolen ein gleichmäßiges Ansprechverhalten auf, was besonders bei einer Verwendung der Vorrichtung als Brandmelder (Detektion von Aerosole enthaltende Brandgase) vorteilhaft ist.

Damit insbesondere senkrecht auf die die Gehäuserippen aufweisende Kammerwandung einströmende Gase oder Aerosol noch leichter in die Meßkammer eindringen können, kann insbesondere mittig zwischen den die Gehäuserippen mit unterschiedlicher Neigung aufweisenden Teilbereichen eine Eintrittsöffnung mit einem sich in Richtung auf den Meßkanal verjüngenden Durchtrittsquerschnitt vorgesehen sein. Die Eintrittsöffnung bewirkt dann eine größere Strömungsgeschwindigkeit, so daß das Gas oder Aerosol besser in die Meßkammer einströmen kann.

Vorteilhaft ist, wenn für die Eintrittsöffnung eine von den Gehäuserippen beabstandete Abdeckung vorgesehen ist, die im Querschnitt eine etwa tropfenförmige Außenkontur aufweist. Eine solche Abdeckung verbessert die Licht-Dichtigkeit des Kammergehäuses im Bereich der Eintrittsöffnung, wobei durch die tropfenförmige Ausgestaltung der Abdeckung ein möglichst geringer Strömungswiderstand erreicht wird.

Strömungstechnische Untersuchungen haben gezeigt, daß das Eindringen von Brandgasen in die Meßkammer zusätzlich erleichtert wird, wenn in Querrichtung der äußeren Durchtrittsöffnungen benachbart zu wenigstens einem die Gehäuserippen aufweisenden Gehäusebereich, vorzugsweise im Bereich eines Axialendes des Kammergehäuses, eine den Durchtrittsöffnungen zugewandte Strömungsabrißkante für das zu detektierende Medium vorgesehen ist. Das zu detektierende Medium verwirbelt dann an der Strömungsabrißkante und kann dadurch, insbesondere wenn die Strömungsabrißkante parallel zu den äußeren Durchtrittsöffnungen der Durchtrittskanäle angeordnet ist, leichter in die Durchtrittsöffnungen einströmen. Dabei kann die Wirkung der Strömungsabrißkante dadurch verstärkt werden, daß zwischen dieser und dem die Gehäuserippen aufweisenden Teilbereich des Kammergehäuses eine Nut oder dergleichen Ausnehmung in dem Kammergehäuse vorgesehen ist, in der sich der Wirbel ausbilden kann.

Eine bevorzugte Ausführungsform sieht vor, daß an einer den Gehäuserippen abgewandten Gehäusewandung, insbesondere an der dem Verbindungsflansch abgewandten Gehäusewandung, zusätzliche Gehäuseöffnungen für das zu detektierende Medium vorgesehen sind. Eine Brandgasströmung kann dann noch besser in die Meßkammer gelangen, wobei diese an einer der Brandgasströmung zugewandten Gehäusewandung an den dort vorgesehenen Durchtrittsöffnungen in die Meßkammer einströmen und an den an einer quer dazu angeordneten Gehäusewandung vorgesehenen Gehäuseöffnungen wieder aus der Meßkammer ausströmen kann.

Bei einer besonders gut als Brandmelder geeigneten Ausführungsform der Erfindung ist die Referenzkammer mittig in dem Kammergehäuse angeordnet, wobei beidseits der Referenzkammer symmetrisch ausgebildete Gehäusebereiche vorgesehen sind. Das Kammergehäuse ist dann hinsichtlich Temperaturschwankungen und hinsichtlich des symmetrischen Anströmverhaltens optimiert.

Besonders vorteilhaft ist, wenn einem Referenzkanal wenigstens zwei Meßkanäle zugeordnet sind und wenn diese vorzugsweise längsseits beidseitig des Referenzkanals angeordnet sind. Mit der Vorrichtung können dann zusätzliche Meßgrößen erfaßt werden. So können beispielsweise die beiden Meßkanäle bei einer entsprechend breitbandigen Strahlungsquelle auf unterschiedliche Absorptionslängenwellen eines zu detektierenden Gases abgestimmt sein.

Eine Weiterbildung der Erfindung sieht vor, daß die Vorrichtung einen optischen Sender zur gleichzeitigen diffusen Bestrahlung von Meß- und Referenzkammer aufweist und daß der Meß-Empfänger zur Detektion der aus der Meßkammer und der Referenz-Empfänger zur Detektion der aus der Referenzkammer zurückgestreuten Strahlung des Senders ausgebildet ist. Die Vorrichtung kann dann gleichzeitig auch als Streulichtmelder verwendet werden, da beim Auftreten von Rauch in der Meßkammer die von dem optischen Sender im Meßkammer diffus abgestrahlte Strahlung an den Rauchpartikeln verstärkt reflektiert wird, so daß an dem Meß-Empfänger dann ein größeres Ausgangssignal auftritt als an dem Referenz-Empfänger.

Zweckmäßigerweise ist dabei vorgesehen, daß der Sender zwischen dem Meß-Empfänger und dem Referenz-Empfänger angeordnet ist und daß an dessen Strahlung über den Meß-Parabolspiegel diffus in die Meßkammer und über den Referenz-Parabolspiegel diffus in die Referenzkammer eingeleitet ist. In vorteilhafter Weise können dadurch die eigentlich für die von der Strahlungsquelle abgegebene Strahlung vorgesehenen Empfänger-Parabolspiegel für die Einkopplung der diffusen Strahlung in die Meß- und die Referenzkammer mit genutzt werden.

Eine zweckmäßige Ausführungsform sieht vor, daß die Meßkammer und/oder die Referenzkammer an ihrem der Strahlungsquelle und/oder einem Empfänger zugewandten Endbereich ein für die zur Detektion vorgesehene Strahlung durchlässiges Transparentfenster aufweist. Meß- und Referenzkanal sind dann einerseits gasdicht gegeneinander gekapselt und andererseits sind aber auch die Strahlungsquelle und die Empfänger gegen Verschmutzung geschützt. Bei einer bevorzugten Ausführungsform ist das Trennfenster in das Kammergehäuse vorzugsweise nach dem Verspiegeln eingeklebt oder mit diesem durch Ultraschallschweißen verbunden.

Um bei der Montage des Kammergehäuses den Verzug in dem Kammergehäuse und insbesondere auch in dem Trennfenster möglichst gering zu halten, ist bei einer Ausführungsform der Erfindung wenigstens eine Befestigungsstelle für das Kammergehäuse im Bereich eines Trennfensters, insbesondere an einer dieses haltenden Wandung angeordnet.

Eine bevorzugte Ausführungsform sieht vor, daß das Kammergehäuse verwindungssteif ausgeführt ist und dazu im wesentlichen aus glasfaserverstärktem Kunststoff, insbesondere Polycarbonat, und/oder aus Metall, insbesondere Zinkdruckguß und/oder aus Keramik besteht. Das Kammergehäuse ist dadurch besonders gut gegen Verformung geschützt, so daß sich die Parabolspiegel und die optischen Komponenten bei mechanischer oder thermischer Belastung des Kammergehäuses nicht so leicht dejustieren können.

Eine zweckmäßige Ausgestaltung der Erfindung sieht vor, daß die Vorrichtung ein Außengehäuse aufweist, welches das Kammergehäuse in Gebrauchsstellung umschließt, daß das Außengehäuse an mehreren Stellen Öffnungen für den Durchtritt des zu detektierenden Mediums aufweist, und daß das Kammergehäuse so in dem Außengehäuse angeordnet ist, daß die den Durchtrittöffnungen des Kammergehäuses zugewandten Öffnungen des Außengehäuses einen kleineren Gesamtquerschnitt aufweisen als die diesen abgewandten Öffnungen. In einem solchen Außengehäuse können die durch das Durchtrittverfahren bedingten Asymetrien des nicht rotationssymmetrischen Kammergehäuses weitgehend kompensiert werden, so daß die Meßvorrichtung für aus unterschiedlichen Richtungen auf die Meßkammer einströmenden Gase nahezu die gleiche Empfindlichkeit und Ansprechgeschwindigkeit aufweist.

Bei einer besonders einfachen Ausführungsform weisen die den Durchtrittsöffnungen des Kammergehäuses zugewandten Öffnungen des Außengehäuses eine kleinere Länge und/oder eine geringere Breite auf als die den Durchtrittsöffnungen abgewandten Öffnungen des Außengehäuses. Um ein besonders symmetrisches Detektionsverhalten gegenüber unterschiedlichen Anströmrichtungen zu ermöglichen, ist es vorteilhaft, wenn das Außengehäuse im wesentlichen rotationssymmetrisch, insbesondere kegelförmig ausgebildet ist. Die Symmetrie gegenüber unterschiedlichen Anströmrichtungen kann zusätzlich verbessert werden, wenn in einem vorzugsweise rotationssymmetrsichen Außengehäuse zwei Vorrichtungen angeordnet sind, die mit den ihrem Kammergehäuse abgewandten Platinen-Flachseiten einanderzugewandt sind.

Nachfolgend ist die Erfindung anhand von Ausführungsbeispielen näher erläutert.

Es zeigen zum Teil stärker schematisiert:
- **Fig. 1**: eine Unteransicht auf das Kammergehäuse, welche die Meß- und die Referenzkammer sowie die an deren Axialenden vorgesehenen Parabolspiegel und die labyrinthartigen Durchtrittskanäle für die Meßkammer besonders gut erkennen läßt,
- **Fig. 2**: einen Querschnitt durch das in Figur 1 gezeigte Kammergehäuse an der in Figur 1 mit II markierten Stelle,
- **Fig. 3**: eine Seitenansicht auf das Kammergehäuse, wobei die Gehäuserippen der labyrinthartigen Durchtrittskanäle besonders gut erkennbar sind,
- **Fig. 4**: einen Schnitt durch das in Figur 1 gezeigte Kammergehäuse an der mit IV markierten Stelle,
- **Fig. 5**: eine Teilansicht auf die Unterseite der Platine einer Vorrichtung zum Detektieren eines Gases, wobei die Platine zur Verdeutlichung transparent dargestellt ist, damit auch das auf die Platine aufgesetzte Kammergehäuse mit der darin befindlichen Strahlungsquelle und den Empfängern erkennbar ist,
- **Fig. 6**: einen Schnitt durch die in Figur 5 gezeigte Vorrichtung an der mit VI gekennzeichneten Stelle,
- **Fig. 7**: eine Darstellung ähnlich Figur 5, wobei jedoch für die beiden optischen Empfänger kein Trennfenster vorgesehen ist,
- **Fig. 8**: zwei mit der Unterseite ihrer Platine einanderzugewandte senkrecht auf eine runde Grundplatine montierte Vorrichtung zum Detektieren eines Gases, die für den Einbau in ein rundes Meldergehäuse vorgesehen sind,
- **Fig. 9**: einen Schnitt durch ein rotationssymmetrisches Außengehäuse, der die liegend in das Außengehäuse eingebaute Platine mit dem darauf aufgesetzten Kammergehäuse besonders gut erkennen läßt,
- **Fig. 10 und 11**: eine Unteransicht auf das Kammergehäuse ähnlich Figur 1, wobei beidseits der die labyrinthartigen Durchtrittskanäle aufweisenden Meßkammerwandung Strömungsabrißkanten zum Verwirbeln einer seitlich beziehungsweise axial auf das Kammergehäuse einströmenden Gaströmung vorgesehen sind,
- **Fig. 12 und 13**: ein Kammergehäuse mit einer Meßkammer, an deren Außenwandung zwei Bereiche mit unterschiedlich geneigten labyrinthartigen Durchtrittskanälen vorgesehen sind, deren außenseitige Öffnungen jeweils auf schräg zu der Meßkammer angeordneten Hüllflächen liegen,
- **Fig. 14**: eine Detailvergrößerung des in Figur 13 mit X bezeichneten Bereichs, welche die mittig zwischen die beiden die unterschiedlich geneigten labyrinthartigen Durchtrittskanäle aufweisenden Teilbereiche der Kammerwandung angeordnete Eintrittsöffnungen mit der tropfenförmigen Abdeckung erkennen läßt,
- **Fig. 15 bis 17**: eine Darstellung gemäß Figur 1, wobei jedoch an der oberen Kammerwandung der Meßkammer zusätzliche, als Schlitze oder Rundlöcher ausgebildete Öffnungen für den Durchtritt des zu detektierenden Mediums vorgesehen sind,
- **Fig. 18**: einen Querschnitt durch die obere Kammerwandung der Meßkammer im Bereich der in Figur 17 mit Y bezeichneten Stelle,
- **Fig. 19 und 20**: eine Unteransicht auf das Kammergehäuse mit den in Höhe der Durchtrittsfenster angeordneten Befestigungsstellen,
- **Fig. 21**: eine Unteransicht auf ein Kammergehäuse mit einer mittig angeordneten Referenzkammer, der zwei beidseits zu deren Längsseiten angeordneten Meßkammern zugeordnet sind,
- **Fig. 22**: eine Darstellung ähnlich Figur 1, wobei jedoch zwischen den beiden Empfängern zusätzlich ein Diffus in die Meß- und die Referenzkammer abstrahlender optischer Sender vorgesehen ist,
- **Fig. 23**: einen Längsschnitt durch die in Figur 22 gezeigte Vorrichtung an der mit XXIII gekennzeichneten Stelle, wobei der für den Sender vorgesehene Durchbruch in der Wandung zwischen den beiden Empfängern besonders gut erkennbar ist,
- **Fig. 24 und 26**: eine Seitenansicht eines Außengehäuses zur Aufnahme der in Figur 8 gezeigten Vorrichtung und
- **Fig. 25 und 27**: eine Aufsicht auf das in Figur 24 und 26 gezeigte Außengehäuse.

Eine nach dem Durchlichtprinzip arbeitende, im ganzen mit 1 bezeichnete Vorrichtung zum Detektieren eines Gases oder Aerosols weist eine optische Transmissions-Meßstrecke auf, die hier kurz auch als "Meßstrecke" bezeichnet wird und die durch eine Meßkammer 2 geführt ist. Der Meßstrecke ist eine hier auch als "Referenzstrecke" bezeichnete Transmissions-Referenzstrecke zugeordnet, die durch eine parallel zu der Meßkammer 2 angeordnete Referenzkammer 3 geführt ist. Zum Vergleichen eines aus der Meßstrecke ermittelten Meßsignales mit einem aus der Referenzstrecke ermittelten Referenzsignal weist die Vorrichtung 1 eine auf einer Platine 4 angeordnete Meß- und Auswerteeinheit auf. Für die Meß- und die Referenzstrecke ist eine gemeinsame optische Strahlungsquelle 5 vorgesehen, die außerhalb von Meßund Referenzkammer 2, 3 benachbart zu einem ihrer Axialenden auf der Längsmittelebene von Meß- und Referenzkammer 2, 3 angeordnet ist. An dem der Strahlungsquelle 5 abgewandten Axialende der Meßkammer 2 befindet sich ein Meß-Empfänger 6 zur Detektion der von der Strahlungsquelle 5 ausgesendeten, die Meßkammer 2 durchleuchtenden optischen Strahlung. In gleicher Weise ist für die Referenzstrecke an dem der Strahlungsquelle 5 abgewandten Axialende der Referenzkammer 3 ein Referenz-Empfänger 7 zur Detektion der von der Strahlungsquelle ausgesendeten, die Referenzkammer 3 durchstrahlenden optischen Strahlung vorgesehen.

Die Meßkammer 2, die Referenzkammer 3, die Strahlungsquelle 5 und die beiden Empfänger 6, 7 sind in einem gemeinsamen Kammergehäuse 8 angeordnet, wobei die Meßkammer 2 und die Referenzkammer 3 durch Trennwandungen 9 des Kammergehäuses 8 jeweils sowohl gegeneinander, als auch gegenüber dem für die optische Strahlungsquelle 5 vorgesehenen Gehäusebereich gasdicht abgeschirmt sind. Eine Kammerwandung der Meßkammer 2 ist durch eine Außenwandung des Kammergehäuses 8 gebildet und diese Außenwandung weist Öffnungen 9 für den Zutritt des zu detektierenden Gases auf.

Die für die Meßstrecke vorgesehene optische Strahlung kann auf die Absorptionswellenlänge eines zu detektierenden Gases abgestimmt sein, so daß das von dem Meß-Empfänger 6 detektierte optische Signal durch das Vorhandensein dieses Gases in der Meßkammer 2 geschwächt wird. Da das zu detektierende Gas nur in die Meßkammer 2, nicht jedoch in die Referenzkammer 3 gelangen kann, tritt eine solche Signalschwächung an dem Referenz-Empfänger 7 nicht auf. Durch Vergleichen von Meß- und Referenzsignal kann daher das Gas detektiert werden.

Damit die von der Strahlungsquelle abgegebene optische Strahlung besser für die Messung genutzt werden kann, ist der Strahlungsquelle 5 eine Parabolspiegeleinheit 10 zugeordnet, welche die von der Strahlungsquelle 5 abgegebene optische Strahlung in eine im wesentlichen kollimierten Lichtstrahl bündelt und sowohl in die Meßkammer 2, als auch in die Referenzkammer 3 einkoppelt. Außerdem weist die Vorrichtung 1 für den Meß-Empfänger 6 einen Meß-Parabolspiegel 11 und für den Referenz-Empfänger 7 einen Referenz-Parabolspiegel 12 auf, wobei die Parabolspiegel 11, 12 jeweils so auf die Parabolspiegeleinheit 10 ausgerichtet sind, daß die die Meßkammer 2 durchleuchtende Strahlung auf den Meß-Empfänger 6 und die die Referenzkammer durchleuchtende Strahlung auf den Referenz-Empfänger 7 fokussiert wird. Die von der Strahlungsquelle 5 ausgesendete optische Strahlung kann dadurch besonders gut genutzt werden, so daß eine Strahlungsquelle 5 mit niedriger Leistung vorgesehen sein kann, die einen entsprechend geringen Stromverbrauch ermöglicht. Die Vorrichtung 1 eignet sich deshalb besonders für Batterie- oder Akkubetrieb. Damit die Vorrichtung 1 möglichst einfach hergestellt werden kann, sind die Parabolspiegeleinheit 10 und die beiden Parabolspiegel 11, 12 an Innenflächen des Kammergehäuses 8 vorgesehen. Das Kammergehäuse 8 kann dadurch zusammen mit den Spiegeln in einem einzigen Arbeitsgang hergestellt werden. Außerdem sind die Parabolspiegel 11, 12 durch das Kammergehäuse 8 fest auf die Parabolspiegeleinheit 10 ausgerichtet, so daß ein manuelles Justieren der Parabolspiegel 10, 11, 12 entfällt.

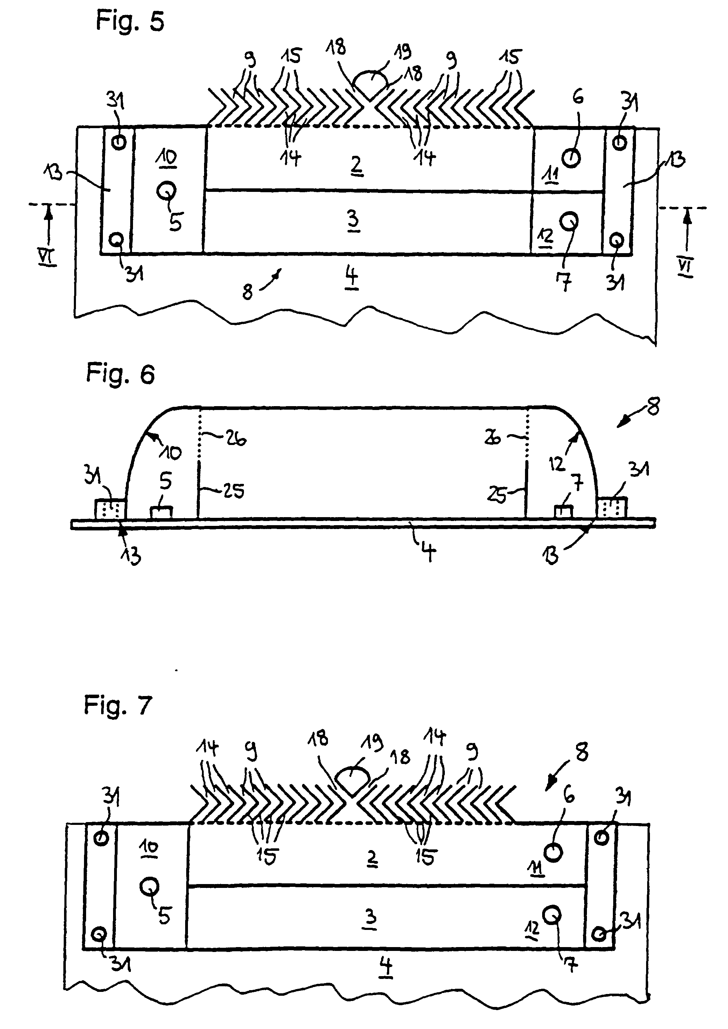

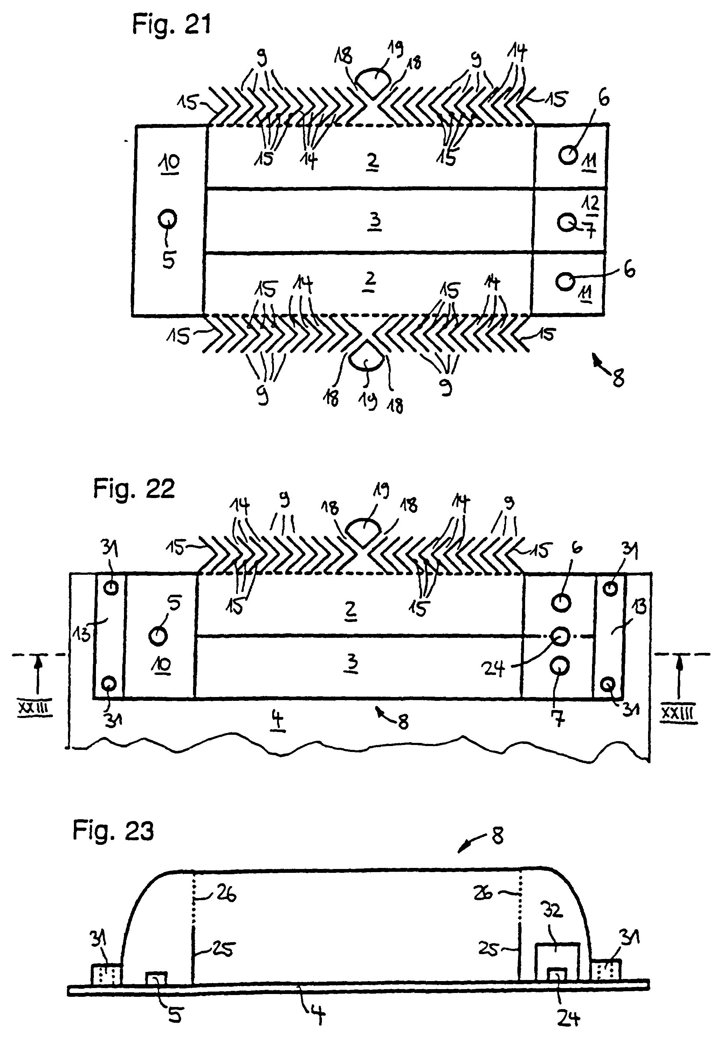

Die Strahlungsquelle 5, der Meß-Empfänger 6 und der Referenz-Empfänger 7 sind zusammen mit der Meß- und Auswerteeinheit auf einer gemeinsamen Platine angeordnet, auf deren Flachseite das Kammergehäuse 8 aufgesetzt ist (Fig. 5. bis 7, Fig. 21 bis 23). Die gesamte Vorrichtung 1 ist dadurch auf einer einzigen Platine 4 angeordnet und ist dementsprechend gut handhabbar. Damit das Kammergehäuse 8 besser mit der Platine 4 verbindbar ist, ist es halbschalenförmig ausgebildet und weist einen ebenen Verbindungsflansch 13 zum Aufsetzen auf die Platine 4 auf. Die Platine 4 bildet dadurch in Montagestellung gleichzeitig eine Kammerwand für die Meßkammer 2 und die Referenzkammer 3.

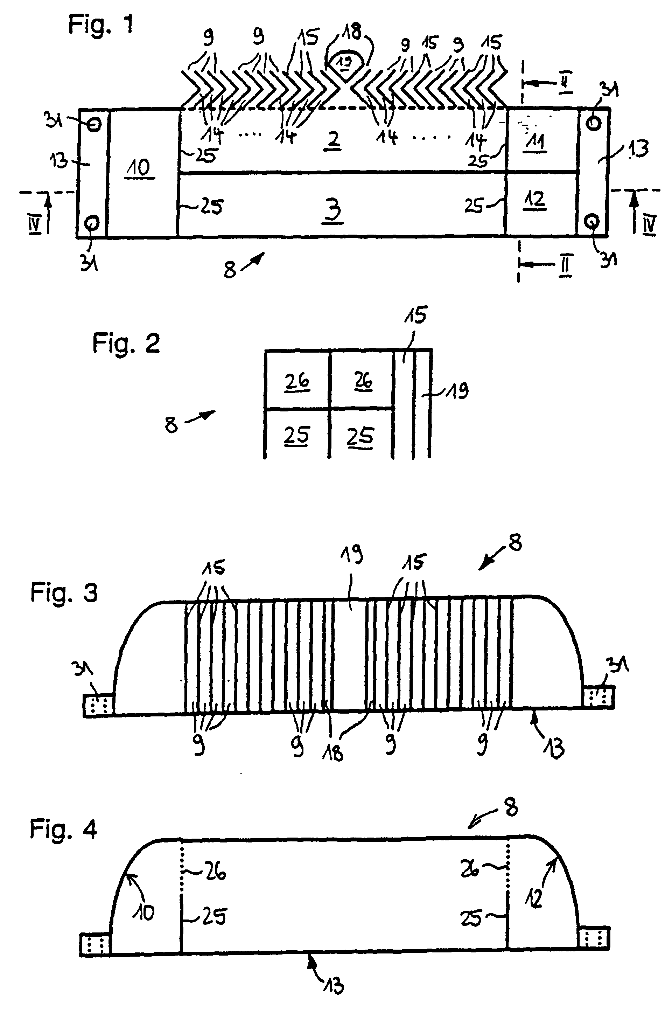

Eine quer zu der Verbindungsebene des Verbindungsflansches 13 beziehungsweise zu der Flachseite der Platine 4 angeordnete Wandung des Kammergehäuses 8 weist Durchtrittskanäle 14 mit einem labyrinthartigen Durchtrittsverlauf für das zu detektierende Medium auf. Die Durchtrittskanäle 14 sind zwischen Gehäuserippen 15 angeordnet, die in Durchtrittsrichtung der Durchtrittskanäle einen L-förmigen oder halbmondförmigen Querschnitt aufweisen. Durch den labyrinthartigen Verlauf der Durchtrittskanäle 14 wird eine gute Lichtdichtigkeit der Meßkammer 2 erreicht, damit von außen möglichst kein Störlicht in die Meß- und/oder Referenzkammer eindringen kann. Die Gehäuserippen 15 sind mit ihrer Längserstreckungsrichtung etwa senkrecht zur Montageebene des Verbindungsflansches 13 ausgerichtet (Fig. 1 bis 3) und reichen mit einem stirnseitigen Ende bis zur Montageebene. Die zwischen den Gehäuserippen 15 vorgesehenen Durchtrittskanäle 14 sind jeweils an ihrem der Montageebene zugewandten Endbereich offen, damit das Kammergehäuse 8 möglichst einfach als Spritzgußteil hergestellt werden kann. Für die Spritzgußform sind dann nur zwei Formwerkzeuge erforderlich.

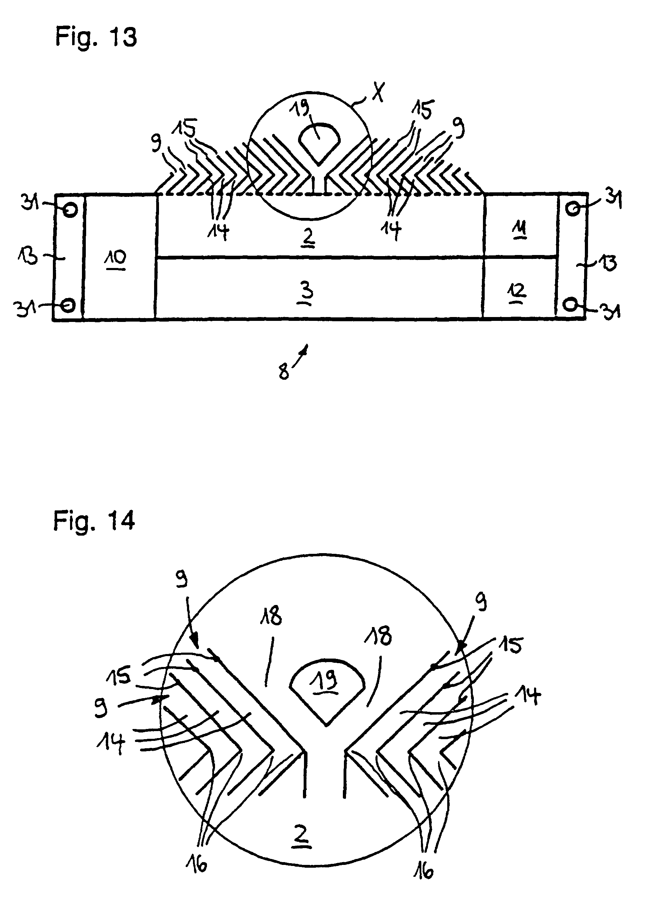

Um für ein in die Meßkammer 2 eintretendes Gas oder Aerosol einen möglichst geringen Strömungswiderstand an den Durchtrittskanälen 14 zu ermöglichen, sind jeweils eine Vielzahl von Gehäuserippen 15 mit dazwischenbefindlichen Durchtrittskanälen 14 nebeneinander angeordnet. Dabei sind zwei Teilbereiche mit unterschiedlich ausgerichteten Gehäuserippen 15 vorgesehen, die spiegelsymmetrisch zur Quermittelebene von Meßkammer 2 und Referenzkammer 3 angeordnet sind und bei denen die Gehäuserippen 15 jeweils mit ihrer L-förmig abgewinkelten Kante 16 in Richtung auf die Quermittelebene weisen (vgl. Fig. 14). Gas- oder Aerosolströmungen, die aus unterschiedlichen Richtungen auf die Gehäuserippen 15 zuströmen, können dadurch leichter in die Meßkammer 2 eindringen.

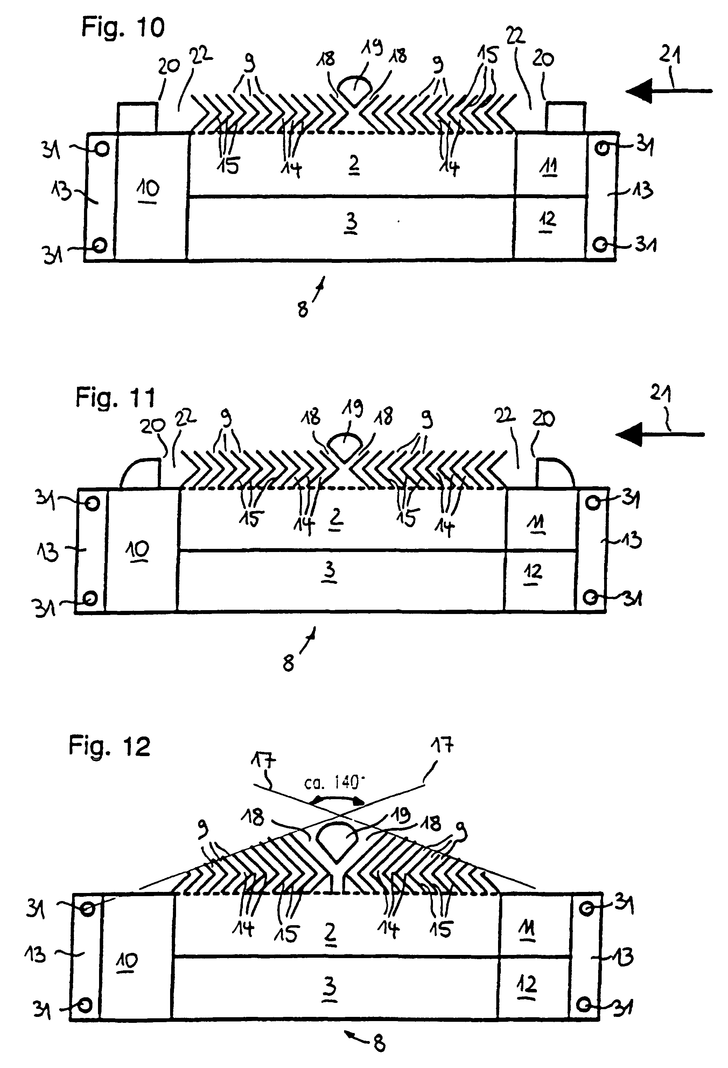

Bei der in Figur 12 bis 14 gezeigten Ausführungsform sind die Durchtrittsöffnungen 9 der beiden Teilbereiche mit den unterschiedlich geneigten Gehäuserippen 15 innerhalb jedes Teilbereiches jeweils auf einer Ebene angeordnet und die beiden Ebenen sind unter einem Winkel von z.B. 140° (Fig. 12) zueinander geneigt. Wie Figur 12 besonders gut erkennen läßt, verlaufen die beiden als Ebene ausgebildeten Hüllflächen 17, in denen jeweils die äußeren Durchtrittsöffnungen eines die Gehäuserippen 15 aufweisenden Teilbereichs liegen, von einem erhöhten Mittelbereich zu den Axialenden des Kammergehäuses 8. Eine in Axialrichtung auf das Kammergehäuse 8 zuströmendes Gas oder Aerosol kann dadurch leichter in die Durchtrittskanäle 14 eintreten. In Figur 12 ist auch erkennbar, daß die in dem erhöhten Mittelbereich angeordneten Gehäuserippen 15 eine größere Höhe aufweisen als die in den beidseitig dazu angeordneten abgesenkten Rippenbereichen. Die der Meßkammer 2 zugewandten inneren Durchtrittsöffnungen der Durchtrittskanäle 14 sind dabei in einer Ebene angordnet, so daß sich in diesem Bereich eine gerade Kammerwandung ergibt.

Außerdem sind die in den beiden Teilbereichen vorgesehenen Gehäuserippen 15 spiegelsymmetrisch angeordnet, damit die Vorrichtung 1 ein möglichst symmetrisches Ansprechverhalten für aus unterschiedlichen Richtungen der auf das Kammergehäuse 8 einströmenden Gase oder Aerosole aufweist.

Mittig zwischen den die Gehäuserippen 15 mit unterschiedlicher Neigung aufweisenden Teilbereichen ist vor der Eintrittsöffnung 18 eine seitlich von den Gehäuserippen 15 beabstandete Abdeckung 19 vorgesehen, die einen Lichteinfall in die Meßkammer 2 verhindert (Fig. 14). Die Abdeckung 19 hat einen etwa tropfenförmigen Querschnitt, der besonders für einen senkrecht zur Längsachse der Meßkammer 2 in die Eintrittsöffnung 18 eintretenden Gas- oder Aerosolstrom einen aerodynamisch günstigen Strömungsverlauf mit niedrigem Strömungswiderstand ermöglicht. Der sich in Eintrittsrichtung verjüngende Durchtrittsquerschnitt der Eintrittsöffnung 18 sorgt für eine bessere Spülung der Meßkammer 2.

Bei den in Figur 10 und 11 gezeigten Ausführungsbeispielen sind im Bereich der Axialenden der die labyrinthartigen Durchtrittskanäle 14 aufweisenden Gehäusewandung Strömungsabrißkanten 20 angeordnet, die bei einem in Axialrichtung der Meßkammer 2 auf die Gehäuserippen 15 zuströmenden Gas- oder Aerosolstrom 21 eine Verwirbelung bewirken, so daß dieser leichter in die Durchtrittskanäle 14 und in die Meßkammer 2 eintreten kann. Bei dem Ausführungsbeispiel nach Figur 10 ist die Strömungsabrißkante 20 durch die den Gehäuserippen 15 zugewandte Längskante eines z.B. quaderförmigen Gehäusevorsprungs an dem Kammergehäuse 8 gebildet. Bei dem Ausführungsbeispiel nach Figur 11 ist die den Gehäuserippen 15 abgewandte Längskante des Gehäusevorsprungs gerundet, damit der Gas- oder Aerosolstrom 21 noch besser zu der Strömungsabrißkante 20 gelangen kann. Zwischen der Strömungsabrißkante 20 und den Gehäuserippen 15 ist in dem Kammergehäuse 8 eine parallel zu den Durchtrittsöffnungen 9 angeordnete Nut 22 vorgesehen, welche die Ausbildung eines Wirbels an der Strömungsabrißkante 20 erleichtert.

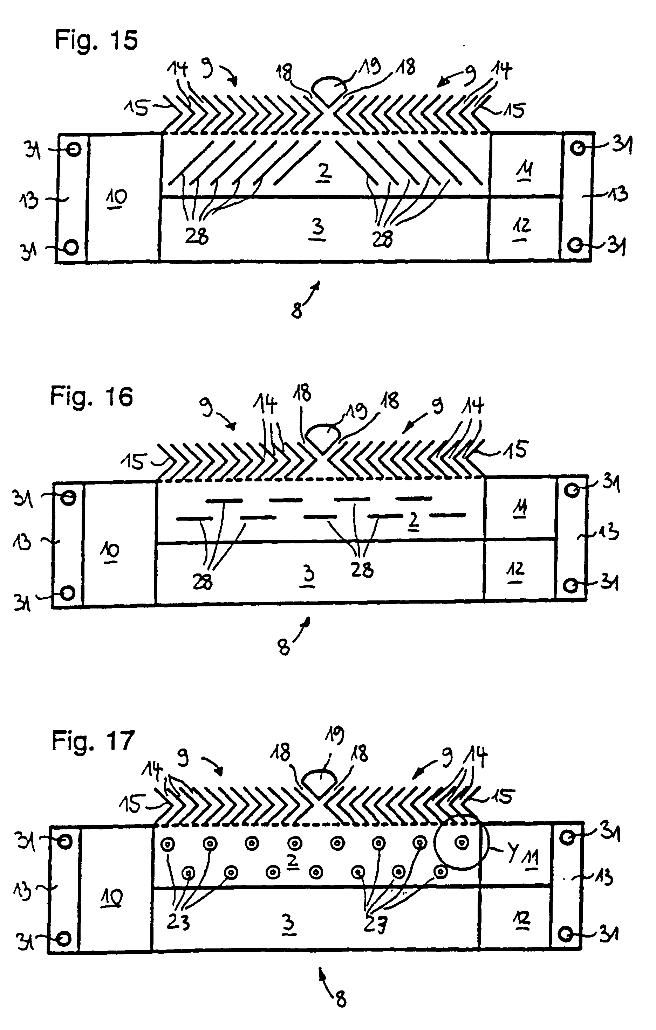

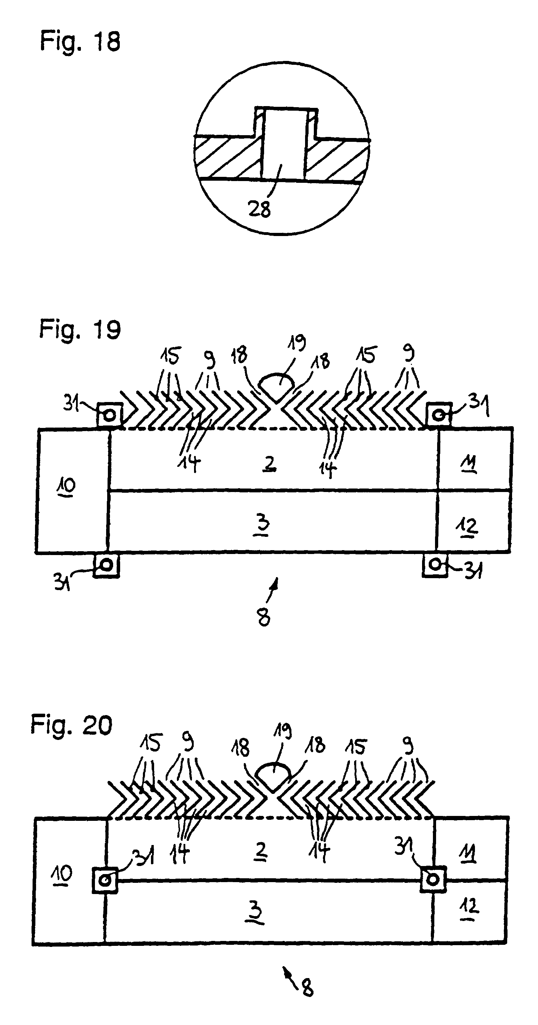

Damit das zu detektierende Gas oder Aerosol noch besser in die Meßkammer 2 gelangen kann, sind bei den Ausführungsbeispielen nach den Figuren 15 bis 17 an der quer zu der die Gehäuserippen 15 aufweisenden Gehäusewandung angeordneten Wandung des Kammergehäuses zusätzliche Öffnungen 23 vorgesehen. Diese können entweder als Rundlochungen (Fig. 17) oder als Schlitze (Fig. 15 und 16) ausgebildet sein, wobei letztere vorzugsweise in Längsrichtung der Meßkammer 2 oder in Richtung des der Meßkammer 2 zugewandten Teilabschnitt eines dem Schlitz benachbarten Durchtrittskanals 14 ausgerichtet sind. Im Bereich der Öffnungen 23 kann die Kammerwandung eine größere Wandstärke aufweisen, damit von außen einfallendes Licht nicht zu den Empfängern 6, 7 gelangen kann (Fig. 18).

In Figur 21 ist ein weiteres Ausführungsbeispiel gezeigt, bei der das Kammergehäuse 8 eine mittig angeordnete Referenzkammer 3 und beidseits dazu jeweils eine parallel zu der Referenzkammer 3 ausgerichtete Meßkammer 2 aufweist. Dabei sind den beiden Meß-Empfängern 6 und dem Referenz-Empfänger 7 eine gemeinsame optische Strahlungsquelle 5 zugeordnet. Der symmetrische Kammeraufbau ermöglicht auch bei Temperaturschwankungen ein formstabiles Kammergehäuse 8, bei dem ein Dejustieren der Parabolspiegel durch thermischen Verzug weitgehend vermieden ist. Durch die beiden Meßkanäle können zusätzliche Informationen über das zu detektierende Gas oder Aerosol gewonnen werden, wodurch die Meßgenauigkeit der in Figur 21 gezeigten Vorrichtung zusätzlich verbessert wird.

Figur 22 und 23 zeigt ein anderes Ausführungsbeispiel, bei dem auf der Platine 4 zwischen dem Meß-Empfänger 6 und dem Referenz-Empfänger 7 ein optischer Sender 24 angeordnet ist, der gegen einen Durchbruch 32 in der zwischen dem Meß-Empfänger 6 und dem Referenz-Empfänger 7 angeordneten Wandung des Kammergehäuses 8 diffus abstrahlt. Die diffuse Strahlung wird zum Teil direkt zum Teil aber auch über die Parabolspiegel 11, 12 sowohl in die Meßkammer 2 als auch in die Meßkammer 3 eingeleitet. Wenn durch die Durchtrittskanäle 14 in die Meßkammer 2 Rauch gelangt, bewirken die Rauchpartikel eine verstärkte Rückstreuung der diffusen Strahlung in Richtung des Meß-Empfängers 6, so daß sich dann zwischen Meß- und Referenzsignal eine Asymetrie ergibt, die in der Meß- und Auswerteeinheit zum Detektieren der Rauchpartikel ausgewertet werden kann. Die in Figur 22 und 23 gezeigte Vorrichtung eignet sich somit sowohl zum Detektieren von Brandgasen, beispielsweise von CO oder CO₂, als auch zum Detektieren von Rauch und ist daher besonders für eine Verwendung als Brandmelder geeignet. Erwähnt werden soll noch, daß das Kammergehäuse 8, vorzugsweise mit seiner die Durchtrittsöffnungen 9 aufweisenden Wandung benachbart zum Platinenrand angeordnet wird, damit die Brandgase ungehindert zu den Durchtrittsöffnungen 9 gelangen können (Figur 5, 22).

Damit für die Meßkammer 2 und die Referenzkammer 3 eine gemeinsame Strahlungsquelle 5 vorgesehen sein kann, Meß- und Referenzkammer aber dennoch räumlich voneinander getrennt werden können, ist zwischen Meß- und Referenzkammer 2, 3 einerseits und dem für die Strahlungsquelle 5 vorgesehenen Gehäusebereich andererseits eine Trennwand 25 mit einem Trennfenster 26 angeordnet.

Da die Parabolspiegel beim Fertigen des Kammergehäuses 8 aus einem nicht reflektierendem Material mit einer reflektierenden Schicht beispielsweise besprüht oder bedampft werden müssen, wird zweckmäßigerweise zunächst die Reflektionsschicht aufgebracht und erst dann wird das Trennfenster 26 eingesetzt und verklebt oder ultraschallverschweißt. Das Trennfenster 26 braucht dann beim Verspiegeln der Parabolflächen und gegebenenfalls auch der Kammerinnenwandungen nicht maskiert zu werden. Außerdem kann die Reflektionsschicht in den Eckbereichen besser aufgetragen werden. Bedarfsweise kann auch bei einem oder bei beiden Empfängern 6, 7 ein Trennfenster 26 vorgesehen sein. Die Parabolspiegel 10, 11 und die Empfänger 6, 7 sind dann besser vor Verschmutzung geschützt. Außerdem sind die für die Empfänger 6, 7 vorgesehenen Gehäusebereiche dadurch jeweils räumlich von der Meß- und Referenzkammer 2, 3 getrennt, so daß dann in der zwischen den Empfängern 6, 7 angeordneten Gehäusewandung ein Durchbruch für den optischen Sender 24 vorgesehen sein kann oder diese Gehäusewandung sogar ganz entfallen kann.

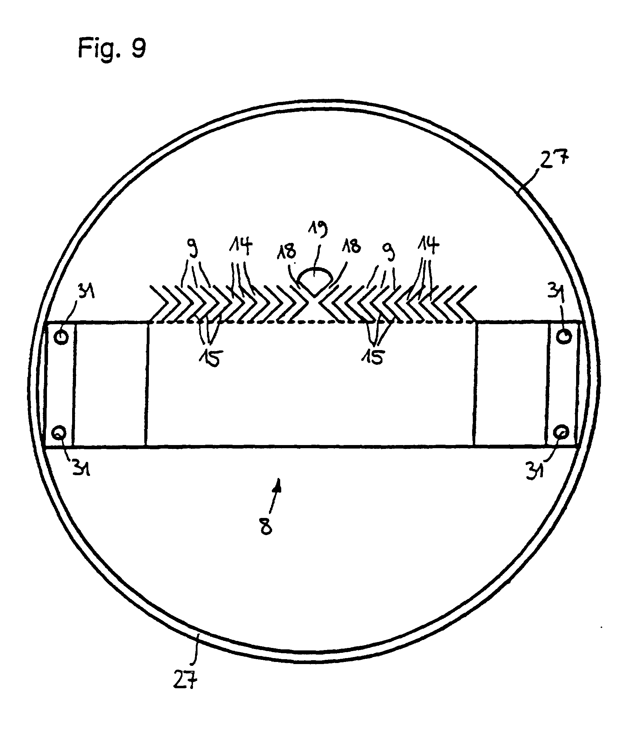

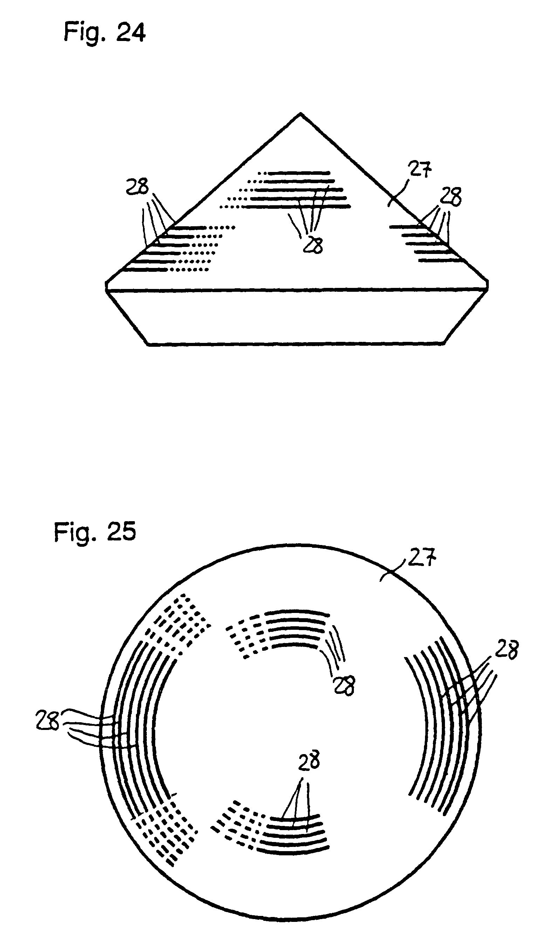

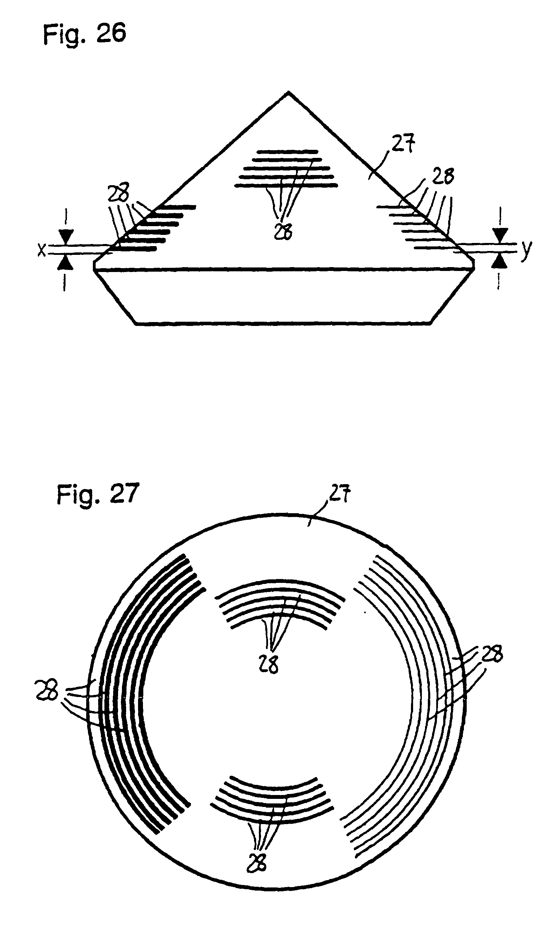

Um insbesondere bei einem einzelnen, flachseitig auf einer Platine 4 montierten Kammergehäuse 8 (vgl. Fig. 9) bei aus unterschiedlichen Richtungen auf die Vorrichtung 1 zuströmenden Gasen oder Aerosolen ein symmetrischeres Detektionsverhalten zu erzielen, kann das Kammergehäuse 8 in einem Außengehäuse 27 (Fig. 24 bis 27) angeordnet sein. Das Außengehäuse 27 hat Öffnungen 28 für den Durchtritt des zu detektierenden Gases. Dabei sind die Öffnungen 28 so ausgebildet, daß die in Gebrauchsstellung den Durchtrittsöffnungen 9 des Kammergehäuses 8 zugewandten Öffnungen 28 des Außengehäuses 27 einen kleineren Gesamtquerschnitt aufweisen, als die den Durchtrittsöffnungen 9 abgewandten Öffnungen 28. Bei dem Ausführungsbeispiel nach Figur 24 und 25 sind die Öffnungen 28 als Schlitze mit unterschiedlicher Länge ausgebildet, wobei die kürzeren Schlitze den Durchtrittsöffnungen 9 des Kammergehäuses 8 zugewandt sind. Bei dem Ausführungsbeispiel nach Figur 26 und 27 weisen die Schlitze eine unterschiedliche Breite auf, wobei die schmaleren Schlitze den Durchtrittsöffnungen 9 des Kammergehäuses 8 zugewandt sind.

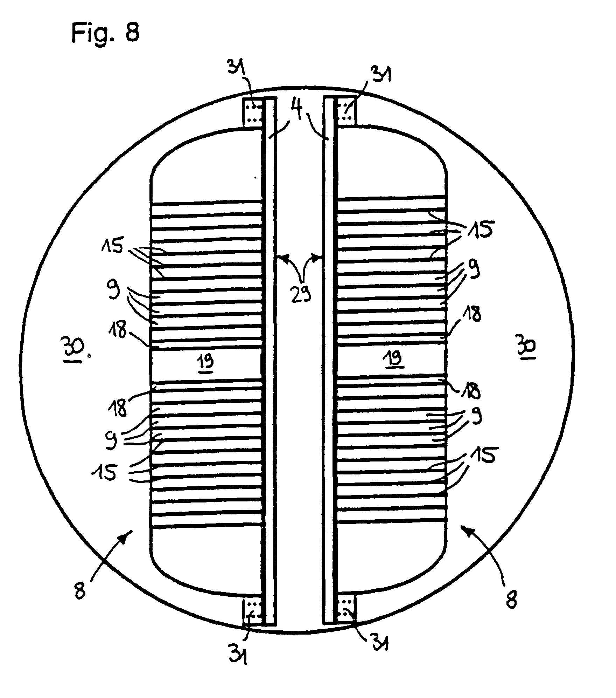

Ein symmetrischeres Detektionsverhalten der Vorrichtung 1 gegenüber aus unterschiedlichen Richtungen einströmenden Gasen kann auch dadurch erreicht werden, daß zwei Vorrichtungen 1 mit dem ihrem Kammergehäuse 8 abgewandten Platinen-Flachseiten einanderzugewandt benachbart zueinander angeordnet sind (vgl. Fig. 8). Zweckmäßigerweise sind dazu die beiden Platinen der Vorrichtungen 1 jeweils senkrecht auf einer gemeinsamen Grundplatte 30 montiert.

Erwähnt werden soll noch, daß die Befestigungsstellen für das in den Figuren 19 und 20 gezeigte Kammergehäuse 8 nicht an den Axialenden des Kammergehäuses 8 vorgesehen sind, sondern unterhalb der Trennfenster 26 angeordnet sind. Der Absolutwert der Ausdehnung wird dadurch verringert.

## Patentansprüche

1. Vorrichtung (1) zum Detektieren eines Gases oder Aerosols mit einer optischen Transmissions-Meßstrecke, mit einer optischen Transmissions-Referenzstrecke sowie mit einer Meß- und Auswerteeinheit zum Vergleichen eines aus der Transmissions-Meßstrecke ermittelten Meßsignales mit einem aus der Transmissions-Referenzstrecke ermittelten Referenzsignal, wobei für die Transmissions-Meß- und die Transmissions-Referenzstrecke eine gemeinsame optische Strahlungsquelle (5) sowie eine Spiegeleinheit (10) zum Einkoppeln deren Strahlung in die Transmissions-Meß- und die Transmissions-Referenzstrecke vorhanden sind, wobei der Transmissions-Meßstrecke ein optischer Meß-Empfänger (6) und der Transmissions-Referenzstrecke ein optischer Referenz-Empfänger (7) zugeordnet sind, wobei die Transmissions-Meßstrecke in einer für das zu detektierende Gas oder Aerosol zugänglichen Meßkammer (2) und die Transmissions-Referenzstrecke in einer Referenzkammer (3) angeordnet sind, **dadurch gekennzeichnet, daß** die Transmissionsmeßstrecke und die Transmissions-Referenzstrecke in einem Kammergehäuse (8) angeordnet sind, daß die Spiegeleinheit eine Parabolspiegeleinheit (10) ist, daß ein Meß-Parabolspiegel (11), der die die Meßkammer (2) durchleuchtende Strahlung auf den Meß-Empfänger (6) fokussiert, und wenigstens ein Referenz-Parabolspiegel (12), der die die Referenzkammer (3) durchleuchtende Strahlung auf den Referenz-Empfänger fokussiert, vorhanden sind, und daß Parabolspiegeleinheit (10), Meß-Parabolspiegel (11) und Referenz-Parabolspiegel (12) durch Innenflächen des Kammergehäuses (8) gebildet sind.

2. Vorrichtung nach Anspruch 1, **dadurch gekennzeichnet, daß** Strahlungsquelle (5), Meß-Empfänger (6) und Referenz-Empfänger (7) sowie gegebenenfalls die Meß- und Auswerteeinheit auf einer gemeinsamen Platine (4) angeordnet sind und daß das Kammergehäuse auf diese Platine (4) aufgesetzt ist.

3. Vorrichtung nach Anspruch 1 oder 2, **dadurch gekennzeichnet, daß** das Kammergehäuse (8) im wesentlichen halbschalenförmig ausgebildet ist und einen vorzugsweise ebenen Verbindungsflansch (13) zum Aufsetzen auf die Platine (4) aufweist.

4. Vorrichtung nach einem der Ansprüche 1 bis 3, **dadurch gekennzeichnet, daß** wenigstens eine die Meßkammer (2) begrenzende Wandung des Kammergehäuses (8) Durchtrittskanäle (14) mit einem labyrinthartigen Durchtrittsverlauf für das zu detektierende Medium aufweist.

5. Vorrichtung nach einem der Ansprüche 1 bis 4, **dadurch gekennzeichnet, daß** die Durchtrittskanäle (14) zwischen Gehäuserippen (15) angeordnet sind und vorzugsweise einen rechteckigen Querschnitt aufweisen.

6. Vorrichtung nach einem der Ansprüche 1 bis 5, **dadurch gekennzeichnet, daß** die Gehäuserippen (15) einen in Durchtrittsrichtung der Durchtrittskanäle etwa L-förmig oder halbmondförmig ausgebildeten Querschnitt aufweisen.

7. Vorrichtung nach einem der Ansprüche 1 bis 6, **dadurch gekennzeichnet, daß** die Gehäuserippen (15) an einer dem Verbindungsflansch (13) abgewandten Wandung des Kammergehäuses (8) vorgesehen sind.

8. Vorrichtung nach einem der Ansprüche 1 bis 7, **dadurch gekennzeichnet, daß** die Gehäuserippen (15) an wenigstens einer quer zur Montageebene des Verbindungsflansches (13) angeordneten Seitenwandung des Kammergehäuses (8) vorgesehen sind.

9. Vorrichtung nach einem der Ansprüche 1 bis 8, **dadurch gekennzeichnet, daß** die Gehäuserippen (15) mit ihrer Längserstreckungsrichtung etwa senkrecht zur Montageebene des Verbindungsflansches (13) ausgerichtet sind und jeweils mit einem stirnseitigen Ende zumindest bereichsweise bis zur Montageebene reichen, und daß die zwischen den Gehäuserippen (15) vorgesehenen Durchtrittskanäle (14) für das zu detektierende Medium jeweils an ihren der Montageebene zugewandten Endbereichen randoffen sind.

10. Vorrichtung nach einem der Ansprüche 1 bis 9, **dadurch gekennzeichnet, daß** mehrere Gehäuserippen (15) vorzugsweise parallel versetzt zueinander angeordnet sind und daß die äußeren, der Meßkammer (2) abgewandten Durchtrittsöffnungen (9) der zwischen den Gehäuserippen (15) vorgesehenen Durchtrittskanäle (14) auf einer Hüllfläche liegen, die zumindest abschnittweise gegenüber der Transmissions-Meßstrecke geneigt ist.

11. Vorrichtung nach einem der Ansprüche 1 bis 10, **dadurch gekennzeichnet, daß** die äußeren Durchtrittsöffnungen (9) der zwischen den Gehäuserippen (15) vorgesehenen Durchtrittskanäle (14) zum Verbessern des Einströmverhaltens des zu detektierenden Mediums auf einer Hüllfläche liegen, die ausgehend von einem erhöhten Mittelbereich zu den Axialenden des Kammergehäuses (8) hin beidseitig in Richtung der Meßkammer (2) abfällt.

12. Vorrichtung nach einem der Ansprüche 1 bis 11, **dadurch gekennzeichnet, daß** die in die Meßkammer (2) mündenden inneren Durchtrittsöffnungen der Durchtrittskanäle (14) etwa in einer Ebene liegen und daß die Gehäuserippen in dem erhöhten Mittelbereich eine größere Höhe aufweisen als in den beidseitig axial dazu angeordneten abgesenkten Rippenbereichen.

13. Vorrichtung nach einem der Ansprüche 1 bis 12, **dadurch gekennzeichnet, daß** an dem Kammergehäuse (8) wenigstens zwei Teilbereiche mit in unterschiedlichen Richtungen geneigten Gehäuserippen (15) vorgesehen sind und daß diese insbesondere beidseits des erhöhten Mittelbereiches vorgesehen sind.

14. Vorrichtung nach einem der Ansprüche 1 bis 13, **dadurch gekennzeichnet, daß** die die Gehäuserippen (15) mit unterschiedlicher Neigung aufweisenden Teilbereiche des Kammergehäuses (8) spiegelsymmetrisch bezüglich einer insbesondere senkrecht zur Transmissions-Meßstrecke angeordneten Symmetrieebene ausgebildet sind.

15. Vorrichtung nach einem der Ansprüche 1 bis 14, **dadurch gekennzeichnet, daß** insbesondere mittig zwischen den die Gehäuserippen (15) mit unterschiedlicher Neigung aufweisenden Teilbereichen eine Eintrittsöffnung (18) mit einem sich in Richtung auf die Meßkammer (2) verjüngenden Durchtrittsquerschnitt vorgesehen ist.

16. Vorrichtung nach einem der Ansprüche 1 bis 15, **dadurch gekennzeichnet, daß** für die Eintrittsöffnung (18) eine von den Gehäuserippen (15) beabstandete Abdeckung (19) vorgesehen ist, die im Querschnitt eine etwa tropfenförmige Außenkontur aufweist.

17. Vorrichtung nach einem der Ansprüche 1 bis 16, **dadurch gekennzeichnet, daß** in Querrichtung der äußeren Durchtrittsöffnungen (9) benachbart zu wenigstens einem die Gehäuserippen (15) aufweisenden Gehäusbereich, vorzugsweise im Bereich eines Axialendes des Kammergehäuses (8), eine den Durchtrittsöffnungen (9) zugewandte Strömungsabrißkante (20) für das zu detektierende Medium vorgesehen ist.

18. Vorrichtung nach einem der Ansprüche 1 bis 17, **dadurch gekennzeichnet, daß** die Strömungsabrißkante (20) parallel zu den äußeren Durchtrittsöffnungen (9) der Durchtrittskanäle angeordnet ist.

19. Vorrichtung nach einem der Ansprüche 1 bis 18, **dadurch gekennzeichnet, daß** zwischen der Strömungsabrißkante (20) und dem die Gehäuserippen (15) aufweisenden Teilbereich des Kammergehäuses (8) eine Nut (22) oder dergleichen Ausnehmung in dem Kammergehäuse (8) vorgesehen ist.

20. Vorrichtung nach einem der Ansprüche 1 bis 19, **dadurch gekennzeichnet, daß** an einer den Gehäuserippen (15) abgewandten Gehäusewandung, insbesondere an der dem Verbindungsflansch (13) abgewandten Gehäusewandung, zusätzliche Gehäuseöffnungen (23) für das zu detektierende Medium vorgesehen sind.

21. Vorrichtung nach einem der Ansprüche 1 bis 20, **dadurch gekennzeichnet, daß** die Referenzkammer (3) mittig in dem Kammergehäuse (8) angeordnet ist und daß beideitig der Referenzkammer (3) symmetrisch ausgebildete Gehäusebereiche vorgesehen sind.

22. Vorrichtung nach einem der Ansprüche 1 bis 21, **dadurch gekennzeichnet, daß** einem Referenzkanal wenigstens zwei Meßkanäle zugeordnet sind und daß diese vorzugsweise längsseits beidseits des Referenzkanals angeordnet sind.

23. Vorrichtung nach einem der Ansprüche 1 bis 22, **dadurch gekennzeichnet, daß** ein optischer Sender (24) zur gleichzeitigen diffusen Bestrahlung vom Meß-Kammer (2) und Referenzkammer (3) vorgesehen ist und daß der Meß-Empfänger zur Detektion der aus der Meßkammer (2) und der Referenz-Empfänger (7) zur Detektion der aus der Referenzkammer zurückgestreuten Strahlung des Senders (24) ausgebildet ist.

24. Vorrichtung nach einem der Ansprüche 1 bis 23, **dadurch gekennzeichnet, daß** der Sender (24) zwischen dem Meß-Empfänger (6) und dem Referenz-Empfänger (7) angeordnet ist und daß dessen Strahlung über den Meß-Parabolspiegel (11) diffus in die Meßkammer (2) und über den Referenz-Parabolspiegel (12) diffus in die Referenzkammer (3) eingeleitet ist.

25. Vorrichtung nach einem der Ansprüche 1 bis 24, **dadurch gekennzeichnet, daß** die Meßkammer (2) und/oder die Referenzkammer (3) an ihrem der Strahlungsquelle (5) und/oder einem Empfänger (6, 7) zugewandten Endbereich ein für die zur Detektion vorgesehene Strahlung durchlässiges Trennfenster (26) aufweist.

26. Vorrichtung nach einem der Ansprüche 1 bis 25, **dadurch gekennzeichnet, daß** das Trennfenster (26) in das Kammergehäuse (8) vorzugsweise nach dem Verspiegeln eingeklebt oder mit diesem ultraschallverschweißt ist.

27. Vorrichtung nach einem der Ansprüche 1 bis 26, **dadurch gekennzeichnet, daß** wenigstens eine Befestigungsstelle (31) für das Kammergehäuse (8) im Bereich eines Trennfensters (26), insbesondere an einer dieses haltenden Wandung, angeordnet ist.

28. Vorrichtung nach einem der Ansprüche 1 bis 27, **dadurch gekennzeichnet, daß** das Kammergehäuse (8) ein vorzugsweise einstückig ausgebildetes Kunststoffspritzteil ist.

29. Vorrichtung nach einem der Ansprüche 1 bis 28, verwindungssteif **dadurch gekennzeichnet, daß** das Kammergehäuse (8) verbindungssteif ausgeführt ist und dazu im wesentlichen aus glasfaserverstärktem Kunststoff, insbesondere Polycarbonat, und/oder aus Metall, insbesondere Zinkdruckguß und/oder aus Keramik besteht.

30. Vorrichtung nach einem der Ansprüche 1 bis 29, **dadurch gekennzeichnet, daß** die Platine (4) und das Kammergehäuse (8) etwa den gleichen Ausdehnungskoeffizienten aufweisen

31. Vorrichtung nach einem der Ansprüche 1 bis 30, **dadurch gekennzeichnet, daß** die Vorrichtung (1) ein Außengehäuse (27) aufweist, welches das Kammergehäuse (8) in Gebrauchsstellung umschließt, daß das Außengehäuse (27) an mehreren Stellen Öffnungen (28) für für den Durchtritt des zu detektierenden Mediums aufweist, und daß das Kammergehäuse (8) so in dem Außengehäuse (27) angeordnet ist, daß die den Durchtrittsöffnungen (9) des Kammergehäuses (8) zugewandten Öffnungen (28) des Außengehäuses (27) einen kleineren Gesamtquerschnitt aufweisen, als die diesen abgewandten Öffnungen.

32. Vorrichtung nach einem der Ansprüche 1 bis 31, **dadurch gekennzeichnet, daß** die den Durchtrittsöffnungen (9) des Kammergehäuses (8) zugewandten Öffnungen (28) des Außengehäuses (27) eine kleinere Länge und/oder eine geringere Breite aufweisen als die den Durchtrittsöffnungen (9) abgewandten Öffnungen (27) des Außengehäuses (27).

33. Vorrichtung nach einem der Ansprüche 1 bis 32, **dadurch gekennzeichnet, daß** das Außengehäuse (27) im wesentlichen rotationssymmetrisch, insbesondere kegelförmig ist.

34. Vorrichtung nach einem der Ansprüche 1 bis 33, **dadurch gekennzeichnet, daß** in einem vorzugsweise rotationssymmetrischen Außengehäuse (27) zwei Vorrichtungen (1) angeordnet sind, die mit den ihrem Kammergehäuse (8) abgewandten Platinen-Flachseiten (29) einander zugewandt sind.

## Claims

1. Device (1) for detecting a gas or aerosol with an optical transmission measuring section, with an optical transmission reference section and with a measuring and evaluating unit for comparing a measuring signal obtained from the transmission reference section with a reference signal obtained from the transmission reference section, the transmission measuring and transmission reference sections being provided with a common optical radiation source (5) and a reflector unit (10) for launching the radiation thereof into the transmission measuring and transmission reference sections, the transmission reference section being associated with an optical measurement receiver (6) and die transmission reference section being associated with an optical reference receiver (7), the transmission measuring section being arranged in a measuring chamber (2) accessible to the gas or aerosol which is to be detected and the transmission reference section being arranged in a reference chamber (3), **characterised in that** the transmission measuring section and the transmission reference section are arranged in a chamber housing (8), **in that** the reflector unit is a parabolic reflector unit (10), **in that** a measuring parabolic reflector (11) which focuses the radiation shining through the measuring chamber (2) onto the measuring receiver (6) and at least one reference parabolic reflector (12) which focuses the radiation shining through the reference chamber (3) onto the reference receiver are provided, and that the parabolic reflector unit (10), measuring parabolic reflector (11) and reference parabolic reflector (12) are formed by inner surfaces of the chamber housing (8).

2. Device according to claim 1, **characterised in that** the radiation source (5), measuring receiver (6) and reference receiver (7) and optionally the measuring and evaluating unit are arranged on a common support plate (4) and **in that** the chamber housing is placed on this support plate (4).

3. Device according to claim 1 or 2, **characterised in that** the chamber housing (8) is substantially shaped as a half-shell and has a preferably flat connecting flange (13) for placing on the support plate (4).

4. Device according to one of claims 1 to 3, **characterised in that** at least one wall of the chamber housing (8) delimiting the measuring chamber (2) has through-channels (14) with a labyrinthine flow route for the medium which is to be detected.

5. Device according to one of claims 1 to 4, **characterised in that** the through-channels (14) are arranged between the housing ribs (15) and are preferably rectangular in cross-section.

6. Device according to one of claims 1 to 5, **characterised in that** the housing ribs (15) have a cross-section which is substantially L-shaped or half-moon-shaped in the direction of passage through the through-channels.

7. Device according to one of claims 1 to 6, **characterised in that** the housing ribs (15) are provided on a wall of the chamber housing (8) remote from the connecting flange (13).

8. Device according to one of claims 1 to 7, **characterised in that** the housing ribs (15) are provided on at least one side wall of the chamber housing (8) disposed transversely of the mounting plane of the connecting flange (13).

9. Device according to one of claims 1 to 8, **characterised in that** the housing ribs (15) are aligned with their longitudinal dimension substantially perpendicular to the mounting plane of the connecting flange (13) and each extend with a terminal end face as far as the mounting plane, at least in parts, and **in that** the through-channels (14) for the medium to be detected which are provided between the housing ribs (15) are open at the edges at their end regions facing the mounting plane.

10. Device according to one of claims 1 to 9, **characterised in that** a plurality of housing ribs (15) are preferably arranged parallel and offset from one another and **in that** the outer through-openings (9) of the through-channels (14) provided between the housing ribs (15), remote from the measuring chamber (2), are located on an enveloping surface which is inclined relative to the transmission measuring section, at least in parts.

11. Device according to one of claims 1 to 10, **characterised in that** the outer through-openings (9) of the through-channels (14) provided between the housing ribs (15) for improving the inflow characteristics of the medium which is to be detected are located on an enveloping surface which starting from a raised central portion drops away towards the axial ends of the chamber housing (8) on both sides in the direction of the measuring chamber (2).

12. Device according to one of claims 1 to 11, **characterised in that** the inner through-openings of the through-channels (14) opening into the measuring chamber (2) are located substantially in one plane and **in that** the housing ribs in the raised central portion are higher than in the two lowered areas of ribs arranged axially on both sides thereof.

13. Device according to one of claims 1 to 12, **characterised in that** at least two partial regions are provided on the chamber housing (8) which have housing ribs (15) inclined in different directions and **in that** these are provided, in particular, on both sides of the raised central portion.

14. Device according to one of claims 1 to 13, **characterised in that** the partial regions of the chamber housing (8) comprising the housing ribs (15) with different inclinations are constructed to be mirror-symmetrical with respect to a plane of symmetry arranged, in particular, perpendicularly to the transmission measuring section.

15. Device according to one of claims 1 to 14, **characterised in that** an inlet opening (18) having a flow cross-section which tapers towards the measuring chamber (2) is provided in particular in the centre between the partial regions comprising the housing ribs (15) with different inclinations.

16. Device according to one of claims 1 to 15, **characterised in that** a cover (19) spaced from the housing ribs (15) which has a substantially teardrop-shaped outer contour in cross-section is provided for the inlet opening (18).

17. Device according to one of claims 1 to 16, **characterised in that** a flow stalling edge (20) for the medium to be detected is provided facing the through-openings (9), in the transverse direction of the outer through-openings (9) adjacent to at least one housing region comprising the housing ribs (15), preferably in the region of an axial end of the chamber housing (8).

18. Device according to one of claims 1 to 17, **characterised in that** the flow stalling edge (20) is arranged parallel to the outer through-openings (9) of the throughflow channels.

19. Device according to one of claims 1 to 18, **characterised in that** a groove (22) or similar recess is provided in the chamber housing (9) between the flow stalling edge (20) and the partial region of the chamber housing (8) comprising the housing ribs (15).

20. Device according to one of claims 1 to 19, **characterised in that** additional housing openings (23) for the medium which is to be detected are provided on a housing wall remote from the housing ribs (15), particularly on the housing wall remote from the connecting flange (13).

21. Device according to one of claims 1 to 20, **characterised in that** the reference chamber (3) is arranged in the middle of the chamber housing (8) and that symmetrically shaped housing regions are provided on both sides of the reference chamber (3).

22. Device according to one of claims 1 to 21, **characterised in that** at least two measuring channels are associated with a reference channel and **in that** they are preferably arranged longitudinally on both sides of the reference channel.

23. Device according to one of claims 1 to 22, **characterised in that** an optical transmitter (24) is provided for the simultaneous diffuse irradiation of the measuring chamber (2) and reference chamber (3) and **in that** the measuring receiver is designed to detect the radiation from the transmitter (24) refracted back from the measuring chamber (2) and the reference receiver (7) is designed to detect the radiation from the transmitter (24) refracted back from the reference chamber.

24. Device according to one of claims 1 to 23, **characterised in that** the transmitter (24) is arranged between the measuring receiver (6) and the reference receiver (7) and its radiation is diffusely introduced into the measuring chamber (2) via the measuring parabolic reflector (11) and diffusely introduced into the reference chamber (3) via the reference parabolic reflector (12).

25. Device according to one of claims 1 to 24, **characterised in that** the measuring chamber (2) and/or the reference chamber (3) comprises, at its end region facing the radiation source (5) and/or a receiver (6, 7), a partition window (26) which is permeable to the radiation provided for the detection.

26. Device according to one of claims 1 to 25, **characterised in that** the partition window (26) is adhesively bonded into the chamber housing (8), preferably after being mirror-coated, or is ultrasonically welded thereto.

27. Device according to one of claims 1 to 26, **characterised in that** at least one fixing point (31) for the chamber housing (8) is arranged in the region of a partition window (26), particularly on a wall holding said window.

28. Device according to one of claims 1 to 27, **characterised in that** the chamber housing (8) is an injection-moulded plastics part preferably formed in one piece.

29. Device according to one of claims 1 to 28, **characterised in that** the chamber housing (8) is of non-distortably rigid construction and for this purpose consists essentially of fibreglass-reinforced plastics, particularly polycarbonate, and/or of metal, particularly die-cast zinc and/or of ceramics.

30. Device according to one of claims 1 to 29, **characterised in that** the support plate (4) and the chamber housing (8) have substantially the same coefficient of expansion.

31. Device according to one of claims 1 to 30, **characterised in that** the device (1) comprises an outer housing (27) which encloses the chamber housing (8) in the position of use, **in that** the outer housing (27) has openings (28) at a number of places for the passage of the medium which is to be detected, and **in that** the chamber housing (8) is arranged in the outer housing (27) in such a way that the openings (28) in the outer housing (27) facing the through-openings (9) of the chamber housing (8) have a smaller overall cross-section than the openings remote from them.

32. Device according to one of claims 1 to 31, **characterised in that** the openings (28) in the outer housing (27) facing the through-openings (9) in the chamber housing (8) are shorter and/or narrower than the openings (27) in the outer housing (27) remote from the through-openings (9).

33. Device according to one of claims 1 to 32, **characterised in that** the outer housing (27) is substantially rotationally symmetrical, particularly conical.

34. Device according to one of claims 1 to 33, **characterised in that** two devices (1) are arranged in a preferably rotationally symmetrical outer housing (27), facing one another with the flat sides (29) of the support plate remote from the chamber housing (8).

## Revendications

1. Dispositif (1) pour la détection d'un gaz ou d'un aérosol comprenant une section de mesure de transmission optique, une section de référence de transmission optique ainsi qu'une unité de mesure et d'évaluation pour la comparaison d'un signal de mesure déterminé à partir de la section de mesure de transmission optique avec un signal de référence déterminé à partir de la section de référence de transmission optique, dispositif dans lequel il existe une source de rayonnement optique commune (5) pour la section de mesure de transmission et la section de référence de transmission ainsi qu'une unité à miroir (10) pour l'injection de son rayonnement dans la section de mesure de transmission et la section de référence de transmission, dans lequel un récepteur de mesure optique (6) est associé à la section de mesure de transmission et un récepteur de référence optique (7) est associé à la section de référence de transmission, la section de mesure de transmission étant disposée dans une chambre de mesure (2) accessible au gaz ou à l'aérosol à détecter et la section de référence de transmission étant disposée dans une chambre de référence (3), **caractérisé par le fait que** la section de mesure de transmission et la section de référence de transmission sont disposées dans un boîtier à chambres (8), que l'unité à miroir est une unité à miroir parabolique (10), qu'il existe un miroir parabolique de mesure (11) qui focalise le rayonnement qui traverse la chambre de mesure (2) sur le récepteur de mesure (6) et au moins un miroir parabolique de référence (12) qui focalise le rayonnement qui traverse la chambre de référence (3) sur le récepteur de référence et que l'unité à miroir parabolique (10), le miroir parabolique de mesure (11) et le miroir parabolique de référence (12) sont formés par des surfaces intérieures du boîtier à chambres (8).

2. Dispositif selon la revendication 1, **caractérisé par le fait que** la source de rayonnement (5), le récepteur de mesure (6) et le récepteur de référence (7) ainsi que, le cas échéant, l'unité de mesure et d'évaluation sont disposés sur une platine commune (4) et que le boîtier à chambres (8) est monté sur cette platine (4).

3. Dispositif selon la revendication 1 ou 2, **caractérisé par le fait que** le boîtier à chambres (8) est essentiellement en forme de demi-coque et présente une bride d'assemblage (13) de préférence plane pour le montage sur la platine (4).

4. Dispositif selon l'une des revendications 1 à 3, **caractérisé par le fait qu'**au moins une des parois du boîtier à chambres (8) limitant la chambre de mesure (2) présente des canaux de passage (14) avec un parcours de passage en labyrinthe pour le médium à détecter.

5. Dispositif selon l'une des revendications 1 à 4, **caractérisé par le fait que** les canaux de passage (14) sont disposés entre des ailettes de boîtier (15) et présentent de préférence une section rectangulaire.

6. Dispositif selon l'une des revendications 1 à 5, **caractérisé par le fait que** les ailettes de boîtier (15) présentent une section approximativement en L ou en demi-lune dans la direction de passage des canaux de passage.

7. Dispositif selon l'une des revendications 1 à 6, **caractérisé par le fait que** les ailettes de boîtier (15) sont prévues sur une paroi du boîtier à chambres (8) opposée à la bride d'assemblage (13).

8. Dispositif selon l'une des revendications 1 à 7, **caractérisé par le fait que** les ailettes de boîtier (15) sont prévues sur au moins une paroi latérale du boîtier à chambres (8) transversale au plan de montage de la bride d'assemblage (13).

9. Dispositif selon l'une des revendications 1 à 8, **caractérisé par le fait que** les ailettes de boîtier (15) sont approximativement perpendiculaires au plan de montage de la bride d'assemblage (13) dans leur direction d'extension longitudinale et s'étendent chacune par leur extrémité frontale, au moins par parties, jusqu'au plan de montage et que les canaux de passage (14) pour le médium à détecter prévus entre les ailettes de boîtier (15) sont chacun ouverts en bordure à leurs parties terminales tournées vers le plan de montage.

10. Dispositif selon l'une des revendications 1 à 9, **caractérisé par le fait que** plusieurs ailettes de boîtier (15) sont de préférence décalées parallèlement les unes par rapport aux autres et que les orifices de passage extérieurs (9), opposés à la chambre de mesure (2), des canaux de passage (14) prévus entre les ailettes de boîtier (15) sont situés sur une surface enveloppante qui, au moins par sections, est inclinée par rapport à la section de mesure de transmission.

11. Dispositif selon l'une des revendications 1 à 10, **caractérisé par le fait que**, pour améliorer les caractéristiques d'admission du fluide à détecter, les orifices de passage extérieurs (9) des canaux de passage (14) prévus entre les ailettes de boîtier (15) sont situés sur une surface enveloppante qui, partant d'une zone centrale surélevée, descende vers les extrémités axiales du boîtier à chambres (8) de chaque côté en direction de la chambre de mesure (2).

12. Dispositif selon l'une des revendications 1 à 11, **caractérisé par le fait que** les orifices de passage intérieurs aboutissant dans la chambre de mesure (2) des canaux de passage (14) sont approximativement situés dans un plan et que les ailettes de boîtier dans la zone centrale surélevée présentent une plus grande hauteur que dans les zones d'ailettes abaissées disposées de chaque côté axialement par rapport à celle-ci.

13. Dispositif selon l'une des revendications 1 à 12, **caractérisé par le fait qu'**il est prévu sur le boîtier à chambres (8) au moins deux parties avec des ailettes de boîtier (15) inclinées dans des directions différentes et que celles-ci sont prévues en particulier de chaque côté de la zone centrale surélevée.

14. Dispositif selon l'une des revendications 1 à 13, **caractérisé par le fait que** les parties du boîtier à chambres (8) présentant les ailettes de boîtier (15) d'inclinaison différente sont symétriques par rapport à un plan de symétrie en particulier perpendiculaire à la section de mesure de transmission.

15. Dispositif selon l'une des revendications 1 à 14, **caractérisé par le fait qu'**il est prévu, en particulier en position centrée entre les parties présentant les ailettes de boîtier (15) d'inclinaison différente, un orifice d'entrée (18) ayant une section de passage se rétrécissant en direction de la chambre de mesure (2).

16. Dispositif selon l'une des revendications 1 à 15, **caractérisé par le fait qu'**il est prévu pour l'orifice d'entrée (18) un recouvrement (19) espacé des ailettes de boîtier (15) qui présente en coupe transversale un contour extérieur approximativement en forme de goutte.

17. Dispositif selon l'une des revendications 1 à 16, **caractérisé par le fait qu'**il est prévu en direction transversale par rapport aux orifices de passage extérieurs (9), au voisinage d'au moins une zone de boîtier présentant les ailettes de boîtier (15), de préférence dans la zone d'une extrémité axiale du boîtier à chambres (8), une arête de décollement des filets (20) tournée vers les orifices de passage (9) pour le médium à détecter.

18. Dispositif selon l'une des revendications 1 à 17, **caractérisé par le fait que** l'arête de décollement des filets (20) est parallèle aux orifices de passage extérieurs (9) des canaux de passage.

19. Dispositif selon l'une des revendications 1 à 18, **caractérisé par le fait qu'**il est prévu entre l'arête de décollement des filets (20) et la partie du boîtier à chambres (8) présentant les ailettes de boîtier (15) une gorge (22) ou un évidement analogue dans le boîtier à chambres (8).

20. Dispositif selon l'une des revendications 1 à 19, **caractérisé par le fait qu'**il est prévu des orifices de boîtier supplémentaires (23) pour le médium à détecter sur une paroi de boîtier opposée aux ailettes de boîtier (15), en particulier sur la paroi de boîtier opposée à la bride d'assemblage (13).

21. Dispositif selon l'une des revendications 1 à 20, **caractérisé par le fait que** la chambre de référence (3) est centrée dans le boîtier à chambres (8) et qu'il est prévu des zones de boîtier symétriques de chaque côté de la chambre de référence (3).

22. Dispositif selon l'une des revendications 1 à 21, **caractérisé par le fait qu'**au moins deux canaux de mesure sont associés à un canal de référence et que ceux-ci sont disposés de préférence de chaque côté le long du canal de référence.

23. Dispositif selon l'une des revendications 1 à 22, **caractérisé par le fait qu'**il est prévu un émetteur optique (24) pour l'illumination diffuse simultanée de la chambre de mesure (2) et de la chambre de référence (3) et que le récepteur de mesure est conçu pour la détection du rayonnement de l'émetteur (24) revenant de la chambre de mesure (2) et le récepteur de référence (7) pour la détection du rayonnement de l'émetteur (24) revenant de la chambre de référence.

24. Dispositif selon l'une des revendications 1 à 23, **caractérisé par le fait que** l'émetteur (24) est disposé entre le récepteur de mesure (6) et le récepteur de référence (7) et que son rayonnement est envoyé de manière diffuse dans la chambre de mesure (2) par le miroir parabolique de mesure (11) et de manière diffuse dans la chambre de référence (3) par le miroir parabolique de référence (12).

25. Dispositif selon l'une des revendications 1 à 24, **caractérisé par le fait que** la chambre de mesure (2) et/ou la chambre de référence (3) présente à sa partie terminale tournée vers la source de rayonnement (5) et/ou un récepteur (6, 7) une fenêtre de séparation (26) transparente au rayonnement prévu pour la détection.

26. Dispositif selon l'une des revendications 1 à 25, **caractérisé par le fait que** la fenêtre de séparation (26) est de préférence collée dans le boîtier à chambres (8) après l'argenture ou soudée aux ultrasons avec celui-ci.

27. Dispositif selon l'une des revendications 1 à 26, **caractérisé par le fait qu'**il est prévu au moins un point de fixation (31) pour le boîtier à chambres (8) dans la zone d'une fenêtre de séparation (26), en particulier sur une paroi qui porte celle-ci.

28. Dispositif selon l'une des revendications 1 à 27, **caractérisé par le fait que** le boîtier à chambres (8) est de préférence une pièce injectée en plastique monobloc.

29. Dispositif selon l'une des revendications 1 à 28, **caractérisé par le fait que** le boîtier à chambres (8) est résistant à la torsion et pour cela réalisé pour l'essentiel en plastique renforcé à la fibre de verre, en particulier en polycarbonate, et/ou en métal, en particulier en zinc moulé sous pression, et/ou en céramique.

30. Dispositif selon l'une des revendications 1 à 29, **caractérisé par le fait que** la platine (4) et le boîtier à chambres (8) présentent approximativement le même coefficient de dilatation.

31. Dispositif selon l'une des revendications 1 à 30, **caractérisé par le fait que** le dispositif (1) présente un boîtier extérieur (27) qui entoure le boîtier à chambres (8) en position d'utilisation, que le boîtier extérieur (27) présente à plusieurs endroits des orifices (28) pour le passage du médium à détecter et que le boîtier à chambres (8) est disposé dans le boîtier extérieur (27) de telle façon que les orifices (28) du boîtier extérieur (27) tournés vers les orifices de passage (9) du boîtier à chambres (8) présentent une section totale plus petite que les orifices opposés à ceux-ci.

32. Dispositif selon l'une des revendications 1 à 31, **caractérisé par le fait que** les orifices (28) du boîtier extérieur (27) tournés vers les orifices de passage (9) du boîtier à chambres (8) présentent une longueur plus petite et/ou une largeur plus faible que les orifices (28) du boîtier extérieur (27) opposés aux orifices de passage (9).

33. Dispositif selon l'une des revendications 1 à 32, **caractérisé par le fait que** le boîtier extérieur (27) présente essentiellement une symétrie de révolution, en particulier une forme conique.

34. Dispositif selon l'une des revendications 1 à 33, **caractérisé par le fait que** deux dispositifs (1), tournés l'un vers l'autre par les côtés plats de platine (29) opposés à leur boîtier à chambres (8), sont disposés dans un boîtier extérieur (27) ayant de préférence une symétrie de révolution.
